# EUROPÄISCHE PATENTSCHRIFT

(11) **EP 1 089 627 B1**
(45) Veröffentlichungstag und Bekanntmachung des Hinweises auf die Patenterteilung: **08.09.2004**
(21) Anmeldenummer: 99927934.2
(22) Anmeldetag: 09.06.1999
(51) Int. Cl.: A01N 43/80, A01N 43/56, A01N 43/18, A01N 25/32

(54) **KOMBINATIONEN AUS HERBIZIDEN UND SAFENERN**
COMBINATION OF HERBICIDES AND SAFENERS
COMBINAISON D'HERBICIDES ET DE PHYTOPROTECTEURS

(30) Priorität: 23.06.1998 DE 19827855
(43) Veröffentlichungstag der Anmeldung: 11.04.2001
(60) Teilanmeldung: 04002856.5
(73) Patentinhaber: Bayer CropScience GmbH, 65929 Frankfurt/Main (DE)
(72) Erfinder: ZIEMER, Frank, D-65830 Kriftel (DE); WILLMS, Lothar, D-65719 Hofheim (DE); BIERINGER, Hermann, D-65817 Eppstein (DE); HACKER, Erwin, D-65239 Hochheim (DE)
(86) Internationale Anmeldenummer: PCT/EP1999/003980
(87) Internationale Veröffentlichungsnummer: WO 1999/066795

(56) Entgegenhaltungen:
- EP-A- 0 298 680
- EP-A- 0 551 650
- WO-A-96/21357
- WO-A-97/01550

## Beschreibung

Die Erfindung betrifft das technische Gebiet der Pflanzenschutzmittel, insbesondere Herbizid-Antidot-Kombinationen (Wirkstoff-Safener-Kombinationen), die hervorragend für den Einsatz gegen konkurrierende Schadpflanzen in Nutzpflanzenkulturen geeignet sind.

Einige neuere herbizide Wirkstoffe, die die p-Hydroxyphenyl-Pyruvat-Dioxygenase (HPPDO) inhibieren, zeigen sehr gute anwendungstechnische Eigenschaften und können in sehr kleinen Aufwandmengen gegen ein breites Spektrum von grasartigen und breitblättrigen Unkräutern eingesetzt werden (siehe z.B. M.P. Prisbylla et al., Brighton Crop Protection Conference - Weeds (1993), 731-738).
Jedoch sind viele dieser hochwirksamen Wirkstoffe nicht voll verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Kulturen nicht oder nur in so geringen Aufwandmengen eingesetzt werden, daß die erwünschte breite herbizide Wirksamkeit gegenüber Schadpflanzen nicht gewährleistet ist. Speziell können viele der genannten Herbizide nicht vollständig selektiv gegen Schadpflanzen in Mais, Reis, Getreide oder einigen anderen Kulturen eingesetzt werden.

Zur Überwindung dieser Nachteile ist es bekannt, herbizide Wirkstoffe in Kombination mit einem sogenannten Safener oder Antidot einzusetzen. Ein Safener im Sinne der Erfindung ist eine Verbindung oder ein Gemisch von Verbindungen, das die phytotoxischen Eigenschaften eines Herbizides gegenüber Nutzpflanzen aufhebt oder verringert, ohne daß die herbizide Wirkung gegenüber Schadpflanzen wesentlich vermindert wird.

Aus WO 97/01550 sind Benzoylpyrazole als herbizid wirksame Verbindungen bekannt. Dort ist ebenfalls beschrieben, daß diese Verbindungen grundsätzlich gemeinsam mit kommerziellen Safenem, wie Benoxacor, Dichlormid und Furilazole, angewendet werden können, um die Selektivität gegenüber Nutzpflanzen zu erhöhen.

Die Auffindung eines Safeners für eine bestimmte Klasse von Herbiziden ist nach wie vor eine schwierige Aufgabe, da die genauen Mechanismen, durch die ein Safener die Schadwirkung von Herbiziden verringert, nicht bekannt sind. Die Tatsache, daß eine Verbindung in Kombination mit einem bestimmten Herbizid als Safener wirkt, läßt daher keine Rückschlüsse darauf zu, ob eine solche Verbindung auch mit anderen Herbizidklassen Safenerwirkung aufweist. So hat sich bei der Anwendung von Safenem zum Schutz der Nutzpflanzen vor Herbizidschädigungen gezeigt, daß die Safener in vielen Fällen immer noch gewisse Nachteile aufweisen können. Dazu zählen:
- der Safener vermindert die Wirkung der Herbizide gegen die Schadpflanzen,
- die nutzpflanzenschützenden Eigenschaften sind nicht ausreichend,
- in Kombination mit einem gegebenen Herbizid ist das Spektrum der Nutzpflanzen, in denen der Safener/Herbizid-Einsatz erfolgen soll, nicht ausreichend groß,
- ein gegebener Safener ist nicht mit einer ausreichend großen Anzahl von Herbiziden kombinierbar.

Aufgabe der vorliegenden Erfindung war es, Verbindungen zu finden, die in Kombination mit den oben genannten Herbiziden geeignet sind, die Selektivität dieser Herbizide gegenüber wichtigen Kulturpflanzen zu steigern.

Es wurde nun überraschend eine Gruppe von Verbindungen gefunden, die zusammen mit bestimmten, als HPPDO-Inhibitoren wirksamen Herbiziden die Selektivität dieser Herbizide gegenüber wichtigen Kulturpflanzen erhöhen. Gegenstand der Erfindung ist daher ein herbizid wirksames Mittel, enthaltend eine Mischung aus
A. einer herbizid wirksamen Menge an einer oder mehreren Verbindungen der Formel (I) 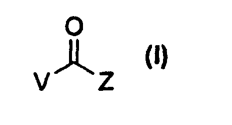 worin
   - V: der Rest (V2) ist, 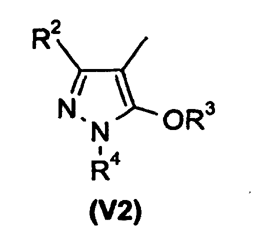 wobei die Symbole und Indizes folgende Bedeutungen haben:
   R² ist Wasserstoff, (C₁-C₄)Alkyl, (C₁-C₄)Alkoxy, (C₁-C₄)Haloalkyl, Halogen, (C₁-C₄)Haloalkoxy, Cyano, Nitro;
   R³ ist Wasserstoff oder ein (C₁-C₄)kohlenstoffhaltiger Rest wie (C₁-C₄)Alkyl, (C₂-C₄)Alkenyl, (C₂-C₄)Alkinyl, (C₁-C₄)Haloalkyl, (C₁-C₄)Alkoxy-(C₁-C₄)alkyl, (C₁-C₄)Alkylcarbonyl, (C₁-C₄)Alkylsulfonyl, (C₁-C₄)Hatoalkylsulfonyl, Arylsulfonyl, Arylcarbonyl-(C₁-C₄)alkyl, Aryl-(C₁-C₄)alkyl;
   R⁴ ist Wasserstoff oder ein (C₁-C₇)kohlenstoffhaltiger Rest wie (C₁-C₄)Alkyl, (C₂-C₄)Alkenyl, (C₂-C₄)Alkinyl, (C₁-C₄)Haloalkyl, Phenyl, Benzyl; und
   - Z: ist der Rest (Z2), 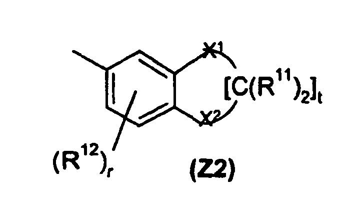 wobei die Symbole und Indizes folgende Bedeutungen haben:
   R¹¹ ist gleich oder verschieden Wasserstoff, (C₁-C₄)Alkyl, Halogen;
   R¹² ist gleich oder verschieden (C₁-C₄)Alkyl, (C₂-C₄)Alkenyl, (C₂-C₄)Alkinyl, Halogen, (C₁-C₄)Haloalkyl, (C₂-C₄)Haloalkenyl, (C₂-C₄)Haloalkinyl, (C₁-C₄)Haloalkoxy, (C₁-C₄)Haloalkylthio, (C₁-C₄)Alkoxycarbonyl, (C₁-C₄)Alkylsulfonyl, (C₁-C₄)Haloalkylsulfonyl, (C₁-C₄)Alkylsulfinyl, (C₁-C₄)Haloalkylsulfinyl, (C₁-C₄)Alkylthio, (C₁-C₄)Alkoxy, (C₁-C₄)Alkylcarbonyl, (C₁-C₄)Alkylaminosulfonyl, (C₁-C₄)Dialkylaminosulfonyl, (C₁-C₄)Alkylcarbamoyl, (C₁-C₄)Dialkylcarbamoyl, (C₁-C₄)Alkoxyalkyl, Phenoxy, Nitro, Cyano, Aryl, Di-(C₁-C₄)alkylphosphono-(C₁-C₄)alkyl;
   r ist 0, 1, 2 oder 3;
   t ist 1 oder 2;
   X¹ ist O, CR¹⁴R¹⁵, CHOH, C=O, C=NO(C₁-C₄)Alkyl;
   X² ist O, S, SO, SO₂, CH₂, NH, N(C₁-C₄)Alkyl, NSO₂(C₁-C₄)Alkyl;
   R¹⁴, R¹⁵ ist gleich oder verschieden Wasserstoff, (C₁-C₄)Alkyl, (C₁-C₄)Alkoxy, (C₁-C₄)Haloalkoxy, (C₁-C₄)Alkyithio, (C₁-C₄)Haloalkylthio oder R¹⁴ und R¹⁵ bilden zusammen eine der Gruppen -O-(CH₂)₂-O-, -O-(CH₂)₃-O-, S-(CH₂)₂-S-, -S-(CH₂)₃-S-, -(CH₂)₄-, -(CH₂)₅-;
   und
B. einer antidotisch wirksamen Menge an einer oder mehreren Verbindungen aus der Gruppe a)
   a) Verbindungen der Formeln (II) bis (IV), 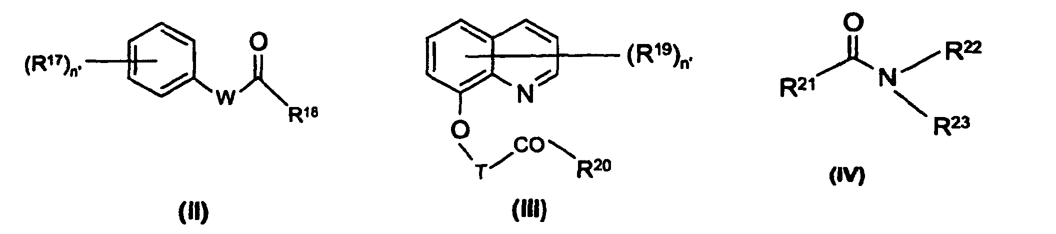 wobei die Symbole und Indizes folgende Bedeutungen haben:
      - n': ist eine natürliche Zahl von 1 bis 5, vorzugsweise 1 bis 3;
      - T: ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist,
      - W: ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-Atom und höchstens ein O-Atom im Ring enthalten ist, vorzugsweise ein Rest aus der Gruppe (W1) bis (W4); 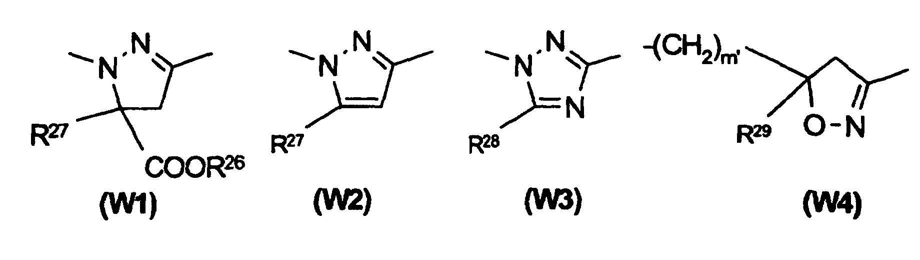
      - m': ist 0 oder 1;
      - R¹⁷, R¹⁹: sind gleich oder verschiedenWasserstoff, Halogen, (C₁-C₄)Alkyl, (C₁-C₄)Alkoxy, Nitro oder (C₁-C₄)Haloalkyl;
      - R¹⁸, R²⁰: sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, der über das N-Atom mit der Carbonylgruppe in (II) bzw. (III) verbunden ist und unsubstituiert oder durch Reste aus der Gruppe (C₁-C₄)Alkyl, (C₁-C₄)Alkoxy oder gegebenenfalls substituiertes Phenyl substituiert ist;
      - R²⁴: ist Wasserstoff oder ein unsubstituierter oder substituierter aliphatischer Kohlenwasserstoffrest;
      - R²⁵: ist Wasserstoff, (C₁-C₆)Alkyl, (C₁-C₆)Alkoxy oder substituiertes oder unsubstituiertes Phenyl;
      - R²⁶: ist Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkyl-silyl;
      - R²⁷, R²⁸, R²⁹: sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl;
      - R²¹: ist (C₁-C₄)Alkyl, (C₁-C₄)Haloalkyl, (C₂-C₄)Alkenyl, (C₂-C₄)Haloalkenyl, (C₃-C₇)Cycloalkyl;
      - R²², R²³: ist gleich oder verschieden Wasserstoff, (C₁-C₄)Alkyl, (C₂-C₄)Alkenyl, (C₂-C₄)Alkinyl, (C₁-C₄)Haloalkyl, (C₂-C₄)Haloalkenyl, (C₁-C₄)Alkylcarbamoyl-(C₁-C₄)alkyl, (C₂-C₄)Alkenylcarbamoyl-(C₁-C₄)alkyl, (C₁-C₄)Alkoxy-(C₁-C₄)alkyl, Dioxolanyl-(C₁-C₄)alkyl, Thiazolyl, Furyl, Furylalkyl, Thienyl, Piperidyl, substituiertes oder unsubstituiertes Phenyl, oder R²² und R²³ bilden zusammen einen substituierten oder unsubstituierten heterocyclischen Ring;
      einschließlich der Stereoisomeren und in der Landwirtschaft gebräuchliche Salze.

Herbizid wirksame Menge bedeutet im Sinne der Erfindung eine Menge an einem oder mehreren Herbiziden, die geeignet ist, den Pflanzenwuchs negativ zu beinflussen.

Antidotisch wirksame Menge bedeutet im Sinne der Erfindung eine Menge an einem oder mehreren Safenem, die geeignet ist, der phytotoxischen Wirkung eines Herbizids oder Herbizidgemisches an einer Nutzpflanze zumindest teilweise entgegenzuwirken.

Sofern es im einzelnen nicht anders definiert wird, gelten für die Reste in den Formeln zu (I) bis (VIII) und nachfolgenden Formeln im allgemeinen die folgenden Definitionen.

Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein.
Alkylreste, auch in den zusammengesetzten Bedeutungen wie Alkoxy, Haloalkyl usw. haben vorzugsweise 1 bis 4 C-Atome und, bedeuten z.B. Methyl, Ethyl, n- oder i-Propyl, n-, i-, t- oder 2-Butyl. Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B. Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.

Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.

Halogen bedeutet Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₃CF₂, CH₂FCHCl, CCl₃, CHCl₂, CH₂CH₂Cl. Haloalkoxy ist z.B. OCF₃, OCHF₂, OCH₂F, CF₃CF₂O, OCH₂CF₃ und OCH₂CH₂Cl. Entsprechendes gilt für sonstige Halogen substituierte Reste.

Ein aliphatischer Kohlenwasserstoffrest ist im allgemeinen ein geradkettiger oder verzweigter gesättigter oder ungesättigter Kohlenwasserstoffrest, vorzugsweise mit 1 bis 18, besonders bevorzugt 1 bis 12 C-Atomen, z.B. Alkyl, Alkenyl oder Alkinyl. Aryl ist im allgemeinen ein mono-, bi- oder polycyclisches aromatisches System mit vorzugsweise 6 bis 14 C-Atomen, vorzugsweise Phenyl, Naphthyl, Tetrahydronaphthyl, Indenyl, Indanyl, Pentalenyl und Fluorenyl, besonders bevorzugt Phenyl.
Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohienwasserstoffoxyrest.

Heterocyclischer Ring, -Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält.
Bevorzugt sind gesättigte Heterocyclen mit 3 bis 7 Ringatomen und einem oder zwei Heteroatomen aus der Gruppe N, O und S, wobei Chalcogene nicht benachbart sind.
Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.

Bevorzugte sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 bis 6 Ringatomen und einem Heteroatom aus der Gruppe N, O und S.

Ganz besonders bevorzugte teilweise ungesättigte Heterocyclen sind Pyrazolin, Imidazolin und Isoxazolin.

Ebenso bevorzugt sind mono- oder bicyclische aromatische Heterocyclen mit 5 bis 6 Ringatomen, die ein bis vier Heteroatome aus der Gruppe N, O, S enthalten, wobei Chalcogene nicht benachbart sind. Besonders bevorzugt sind monocyclische aromatische Heterocyclen mit 5 bis 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol.
Ganz besonders bevorzugt sind Pyrazol, Thiazol, Triazol und Furan.

Substituierte Reste, wie substituierte Kohlenwasserstoffreste, z.B. substituiertes Alkyl, Alkenyl, Alkinyl, Aryl, Phenyl und Arylalkyl wie Benzyl, oder substituiertes Heterocyclyl oder Heteroaryl, bedeuten einen vom unsubstituierten Grundkörper abgeleiteten substituierten Rest, wobei die Substituenten vorzugsweise einen oder mehrere, vorzugsweise 1, 2 oder 3, im Falle von Cl und F auch bis zur maximal möglichen Anzahl, Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, vorzugsweise Alkenyl, Alkinyl, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor oder Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-arylamino sowie N-Heterocyclen. Dabei sind Alkylreste mit 1 bis 4 C-Atomen bevorzugt. Aryl ist dabei vorzugsweise Phenyl oder substituiertes Phenyl. Für Acyl gilt dabei die weiter unten genannte Definition, vorzugsweise (C₁-C₄)Alkanoyl. Entsprechendes gilt für substituiertes Hydroxylamino oder Hydrazino.

Gegebenenfalls substituiertes Phenyl ist vorzugsweise Phenyl, das unsubstituiert oder ein- oder mehrfach, vorzugsweise bis zu dreifach, bei Halogen wie CI und F auch bis zu fünffach, durch gleiche oder verschiedene Reste aus der Gruppe Halogen, (C₁-C₄)Alkyl, (C₁-C₄)Alkoxy, (C₁-C₄)Haloalkyl, (C₁-C₄)Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestern, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄-Alkyl)-carbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkytsulfonyl, Alkylsulfinyl oder N-Alkyl-1-iminoalkyl.
Von den Formeln (I) bis (VIII) umfaßt sind auch alle Stereoisomeren, welche die gleiche topologische Verknüpfung der Atome aufweisen, und deren Gemische.

Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Als herbizide Wirkstoffe eignen sich erfindungsgemäß solche Verbindungen der allgemeinen Formel (I), die allein nicht oder nicht optimal in Getreidekulturen und/oder Mais eingesetzt werden können, weil sie die Kulturpflanzen zu stark schädigen.
Herbizide der allgemeinen Formel (I) sind z.B. aus
EP-A 0 496 631, WO-A 97/13 765,
WO-A 97/01 550, WO-A 97/19 087,
WO-A 96/30 368, WO-A 96/31 507,
WO-A 96/26 192, WO-A 96/26 206,
WO-A 96/10 561, WO-A 96/05 183,
WO-A 96/05 198, WO-A 96/05 197,
WO-A 96/05 182, WO-A 97/23 491 und
WO-A 97/27 187 bekannt.

Die zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Die Verbindungen der Formel (II) sind z.B. aus EP-A-0 333131 (ZA-89/1960), EP-A-0 269 806 (US-A-4,891,057), EP-A-0 346 620 (AU-A-89/34951), EP-A-0 174 562, EP-A-0 346 620 (WO-A-91/08 202), WO-A-91/07 874 oder WO-A 95/07 897 (ZA 94/7120) und der dort zitierten Literatur bekannt oder können nach oder analog den dort beschriebenen Verfahren hergestellt werden. Die Verbindungen derFormel (III) sind aus EP-A-0 086 750, EP-A-0 94349 (US-A-4,902,340), EP-A-0 191736 (US-A-4,881,966) und EP-A-0 492 366 und dort zitierter Literatur bekannt oder können nach oder analog den dort beschriebenen Verfahren hergestellt werden. Einige Verbindungen sind ferner in EP-A-0 582 198 beschrieben.
Die Verbindungen der Formel (II) sind aus zahlreichen Patentanmeldungen bekannt, beispielsweise US-A-4,021,224 und US-A-4,021,229.

Die zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Bevorzugt sind Herbizid-Safener-Kombinationen, enthaltend Safener der Formel (II) und/oder (III) bei denen die Symbole und Indizes folgende Bedeutungen haben:
- R²⁴: ist Wasserstoff, (C₁-C₁₈)-Alkyl, (C₃-C₁₂)-Cycloalkyl, (C₂-C₈)-Alkenyl und (C₂-C₁₈)Alkinyl, wobei die C-haltigen Gruppen durch einen oder mehrere, vorzugsweise bis zu drei, Reste R⁵⁰ substituiert sein können;
- R⁵⁰: ist gleich oder verschieden Halogen, Hydroxy, (C₁-C₈)-Alkoxy, (C₁-C₈)Alkylthio, (C₂-C₈)Alkenylthio, (C₂-C₈)Alkinylthio, (C₂-C₈)Alkenyloxy, (C₂-C₈)Alkinyloxy, (C₃-C₇)Cycloalkyl, (C₃-C₇)Cycloalkoxy, Cyano, Mono- und Di-(C₁-C₄)-alkyl)-amino, Carboxy, (C₁-C₈)Alkoxycarbonyl, (C₂-C₈)Alkenyloxycarbonyl, (C₁-C₈)Alkylthiocarbonyl, (C₂-C₈)Alkinyloxycarbonyl, (C₁-C₈)Alkylcarbonyl, (C₂-C₈)Alkenylcarbonyl, (C₂-C₈)Alkinylcarbonyl, 1-(Hydroxyimino)-(C₁-C₆)-alkyl, 1-[(C₁-C₄)Alkylimino]-(C₁-C₄)-alkyl, 1-[(C₁-C₄)Alkoxyimino]-(C₁-C₆)-alkyl, (C₁-C₈)Alkylcarbonylamino, (C₂-C₈)Alkenylcarbonylamino, (C₂-C₈)Alkinylcarbonylamino, Aminocarbonyl, (C₁-C₈)Alkylaminocarbonyl, Di-(C₁-C₆)-alkylaminocarbonyl, (C₂-C₆)Alkenylaminocarbonyl, (C₂-C₆)Alkinylaminocarbonyl, (C₁-C₈)Alkoxycarbonylamino, (C₁-C₈)Alkylaminocarbonylamino, (C₁-C₆)Alkylcarbonyloxy, das unsubstituiert oder durch R⁵¹ substituiert ist, (C₂-C₆)Alkenylcarbonyloxy, (C₂-C₆)Alkinylcarbonyloxy, (C₁-C₈)Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, vorzugsweise bis zu dreifach durch Reste R⁵² substituiert sind; SiR'₃, -O-SiR'₃, R'₃Si-(C₁-C₈)-alkoxy, -CO-O-NR'₂, -O-N=CR'₂, -N=CR'₂, -O-NR'₂, -NR'₂, CH(OR')₂, -O-(CH₂)ₘ-CH(OR')₂, -CR'''(OR')₂, -O-(CH₂)ₘCR'''(OR")₂ oder durch R''O-CHR'''CHCOR''-(C₁-C₆)-alkoxy,
- R⁵¹: ist gleich oder verschieden Halogen, Nitro, (C₁-C₄)Alkoxy und unsubstituiertes oder mit einem oder mehreren, vorzugsweise bis zu drei Resten R⁵² substituiertes Phenyl;
- R⁵²: ist gleich oder verschieden Halogen, (C₁-C₄)Alkyl, (C₁-C₄)Alkoxy, (C₁-C₄)Haloalkyl, (C₁-C₄)-Haloalkoxy oder Nitro;
- R': ist gleich oder verschieden Wasserstoff, (C₁-C₄)Alkyl, unsubstituiertes oder durch einen oder mehrere, vorzugsweise bis zu drei, Reste R⁵² substituiertes Phenyl oder zwei Reste R' bilden zusammen eine (C₂-C₆)Alkandiylkette;
- R": ist gleich oder verschieden (C₁-C₄)Alkyl oder zwei Reste R" bilden zusammen eine (C₂-C₆)Alkandiylkette;
- R''': ist Wasserstoff oder (C₁-C₄)Alkyl;
- m: ist 0, 1, 2, 3, 4, 5 oder 6.

Besonders bevorzugt sind erfindungsgemäße Herbizid-Safener-Kombinationen, enthaltend Safener der Formel (II) und/oder (III), bei denen die Symbole und Indizes folgende Bedeutungen haben:
- R²⁴: ist Wasserstoff, (C₁-C₈)Alkyl oder (C₃-C₇)Cycloalkyl, wobei die vorstehenden C-haltigen Reste unsubstituiert sind oder ein- oder mehrfach durch Halogen oder ein- oder zweifach, vorzugsweise einfach, durch Reste R⁵⁰ substituiert sind,
- R⁵⁰: ist gleich oder verschieden Hydroxy, (C₁-C₄)Alkoxy, Carboxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)-alkyl, 1-[(C₁-C₄)Alkylimino]-(C₁-C₄)-alkyl und 1-[(C₁-C₄)Alkoxyimino]-(C₁-C₄)-alkyl; -SiR'₃, -O-N=CR'₂, -N=CR'₂, -NR'₂, und -O-NR'₂, worin R' gleich oder verschieden Wasserstoff, (C₁-C₄)Alkyl oder paarweise eine (C₄-C₅)Alkandiylkette bedeutet,
- R²⁷, R²⁸, R²⁹: sind gleich oder verschieden Wasserstoff, (C₁-C₈)Alkyl, (C₁-C₆)Haloalkyl, (C₃-C₇)Cycloalkyl oder Phenyl, das unsubstituiert oder durch einen oder mehrere Reste aus der Gruppe Halogen, Cyano, Nitro, Amino, Mono- und Di-[(C₁-C₄)alkyl]-amino, (C₁-C₄)Alkyl, (C₁-C₄)Haloalkyl, (C₁-C₄)Alkoxy, (C₁-C₄)Haloalkoxy, (C₁-C₄)Alkylthio und (C₁-C₄)Alkylsulfonyl substituiert ist;
- R²⁶: ist Wasserstoff, (C₁-C₈)Alkyl, (C₁-C₈)Haloalkyl, (C₁-C₄-Alkoxy)-(C₁-C₄)-alkyl, (C₁-C₆)Hydroxyalkyl, (C₃-C₇)Cycloalkyl oder Tri-(C₁-C₄)-alkylsilyl bedeutet,
- R¹⁷, R¹⁹: sind gleich oder verschieden Wasserstoff, Halogen, Methyl, Ethyl, Methoxy, Ethoxy, (C₁ oder C₂)-Haloalkyl, vorzugsweise Wasserstoff, Halogen oder (C₁ oder C₂)-Haloalkyl.

Ganz besonders bevorzugt sind Safener in welchen die Symbole und Indizes in Formel (II) folgende Bedeutungen haben:
- R¹⁷: ist Wasserstoff, Halogen, Nitro oder (C₁-C₄)Haloalkyl;
- n': ist 1, 2 oder 3;
- R¹⁸: ist ein Rest der Formel OR²⁴,
- R²⁴: ist Wasserstoff, (C₁-C₈)Alkyl oder (C₃-C₇)Cycloalkyl, wobei die vorstehenden C-haltigen Reste unsubstituiert sind oder ein- oder mehrfach, vorzugsweise bis zu dreifach, durch gleiche oder verschiedene Halogen-Reste oder bis zu zweifach, vorzugsweise einfach, durch gleiche oder verschiedene Reste aus der Gruppe Hydroxy, (C₁-C₄)Alkoxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)-alkyl, 1-[(C₁-C₄)Alkylimino]-(C₁-C₄)-alkyl, 1-[(C₁-C₄)Alkoxyimino]-(C₁-C₄)-alkyl und Reste der Formeln -SiR'₃, -O-N=R'₂, -N=CR'₂, -NR'₂ und -O-NR'₂ substituiert sind, wobei die Reste R' in den genannten Formeln gleich oder verschieden Wasserstoff, (C₁-C₄)Alkyl oder paarweise (C₄ oder C₅)Alkandiyl bedeuten;
- R²⁷, R²⁸, R²⁹: sind gleich oder verschieden Wasserstoff, (C₁-C₈)Alkyl, (C₁-C₆)Haloalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Alkoxy, Nitro, (C₁-C₄)Haloalkyl und (C₁-C₄)Haloalkoxy substituiert ist, und
- R²⁶: ist Wasserstoff, (C₁-C₈)Alkyl, (C₁-C₈)Haloalkyl, (C₁-C₄)Alkoxy-(C₁-C₄)-alkyl, (C₁-C₆)Hydroxyalkyl, (C₃-C₇)Cycloalkyl oder Tri-(C₁-C₄)-alkylsilyl .

Ganz besonders bevorzugt sind auch Safener der Formel (III), bei denen die Symbole und Indizes folgende Bedeutungen haben:
- R¹⁹: ist Wasserstoff, Halogen oder (C₁-C₄)Haloalkyl;
- n': ist 1, 2 oder 3, wobei (R¹⁹)_{n'} vorzugsweise 5-Cl ist;
- R²⁰: ist ein Rest der Formel OR²⁴;
- T: ist CH₂ und
- R²⁴: ist Wasserstoff, (C₁-C₈)Alkyl, (C₁-C₈)Haloalkyl oder (C₁-C₄)Alkoxy-(C₁-C₄)-alkyl, vorzugsweise (C₁-C₈)Alkyl.

Insbesondere bevorzugt sind dabei Safener der Formel (II) bei denen die Symbole und Indizes folgende Bedeutungen haben:
- W: ist (W1);
- R¹⁷: ist Wasserstoff, Halogen oder (C₁-C₂)Haloalkyl;
- n': ist 1, 2 oder 3, wobei (R¹⁷)_{n'} vorzugsweise 2,4-Cl₂ ist;
- R¹⁸: ist ein Rest der Formel OR²⁴;
- R²⁴: ist Wasserstoff, (C₁-C₈)Alkyl, (C₁-C₄)Haloalkyl, (C₁-C₄)Hydroxyalkyl, (C₃-C₇)Cycloalkyl, (C₁-C₄)Alkoxy-(C₁-C₄)-alkyl oder Tri-(C₁-C₂)-alkylsilyl, vorzugsweise (C₁-C₄)Alkyl;
- R²⁷: ist Wasserstoff, (C₁-C₈)Alkyl, (C₁-C₄)Haloalkyl oder (C₃-C₇)Cyclvalkyl, vorzugsweise Wasserstoff oder (C₁-C₄)Alkyl, und
- R²⁶: ist Wasserstoff, (C₁-C₈)Alkyl, (C₁-C₄)Haloalkyl, (C₁-C₄)Hydroxyalkyl, (C₃-C₇)Cycloalkyl, (C₁-C₄)Alkoxy-(C₁-C₄)-alkyl oder Tri-(C₁-C₂)-alkylsilyl, vorzugsweise Wasserstoff oder (C₁-C₄)Alkyl.

Insbesondere bevorzugt sind auch herbizide Mittel, enthaltend einen Safener der Formel (II), worin die Symbole und Indizes folgende Bedeutungen haben:
- W: ist (W2);
- R¹⁷: ist Wasserstoff, Halogen oder (C₁-C₂)Haloalkyl;
- n': ist 1, 2 oder 3, wobei (R¹⁷)_{n'} vorzugsweise 2,4-Cl₂ ist;
- R¹⁸: ist ein Rest der Formel OR²⁴;
- R²⁴: ist Wasserstoff, (C₁-C₈)Alkyl, (C₁-C₄)Haloalkyl, (C₁-C₄)Hydroxyalkyl, (C₃-C₇)Cycloalkyl, (C₁-C₄-Alkoxy)-C₁-C₄-alkyl oder Tri-(C₁-C₂)-alkyl-silyl, vorzugsweise (C₁-C₄)Alkyl, und
- R²⁷: ist Wasserstoff, (C₁-C₈)Alkyl, (C₁-C₄)Haloalkyl, (C₃-C₇)Cycloalkyl oder Phenyl, vorzugsweise Wasserstoff oder (C₁-C₄)Alkyl.

Insbesondere bevorzugt sind auch Safener der Formel (II), worin die Symbole und Indizes folgende Bedeutungen haben:
- W: ist (W3);
- R¹⁷: ist Wasserstoff, Halogen oder (C₁-C₂)Haloalkyl;
- n': ist 1, 2 oder 3, wobei (R¹⁷)_{n'} vorzugsweise 2,4-Cl₂ ist;
- R¹⁸: ist ein Rest der Formel OR²⁴;
- R²⁴: ist Wasserstoff, (C₁-C₈)Alkyl, (C₁-C₄)Haloalkyl, (C₁-C₄)Hydroxyalkyl, (C₃-C₇)Cycloalkyl, (C₁-C₄)Alkoxy-(C₁-C₄)-alkyl oder Tri-(C₁-C₂)-alkylsilyl, vorzugsweise (C₁-C₄)Alkyl, und
- R²⁸: ist (C₁-C₈)Alkyl oder (C₁-C₄)Haloalkyl, vorzugsweise C₁-Haloalkyl.

Insbesondere bevorzugt sind auch Safener der Formel (II), worin die Symbole und Indizes folgende Bedeutung haben:
- W: ist (W4);
- R¹⁷: ist Wasserstoff, Halogen, Nitro, (C₁-C₄)Alkyl, (C₁-C₂)Haloalkyl, vorzugsweise CF₃, oder (C₁-C₄)Alkoxy;
- n': ist 1, 2 oder 3;
- m': ist 0 oder 1;
- R¹⁸: ist ein Rest der Formel OR²⁴ ;
- R²⁴: ist Wasserstoff, (C₁-C₄)Alkyl, Carboxy-(C₁-C₄)-alkyl, (C₁-C₄)Alkoxycarbonyl-(C₁-C₄)-alkyl, vorzugsweise (C₁-C₄)Alkoxy-CO-CH₂-, (C₁-C₄)Alkoxy-CO-C(CH₃)H-, HO-CO-CH₂- oder HO-CO-C(CH₃)H-, und
- R²⁹: ist Wasserstoff, (C₁-C₄)Alkyl, (C₁-C₄)Haloalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Haloalkyl, Nitro, Cyano und (C₁-C₄)Alkoxy substituiert ist.

Folgende Gruppen von Verbindungen sind insbesondere als Safener für die herbiziden Wirkstoffe der Formel (1) geeignet:
a) Verbindungen vom Typ der Dichlorphenylpyrazolin-3-carbonsäure (d.h. der Formel (II), worin W' = W1 und (R¹⁷)_{n'} = 2,4-Cl₂), vorzugsweise Verbindungen wie 1-(2,4-Dichlorphenyl)-5-(ethoxycarbonyl)-5-methyl-2-pyrazolin-3-carbonsäureethylester (11-1 ), und verwandte Verbindungen, wie sie in der WO-A 91/07874 beschrieben sind;
b) Derivate der Dichlorphenylpyrazolcarbonsäure (d.h. der Formel (II), worin W = (W2) und (R¹⁷)_{n'} = 2,4-Cl₂ ist ), vorzugsweise Verbindungen wie 1-(2,4-Dichiorphenyl)-5-methyl-pyrazol-3-carbonsäureethylester (II-2), 1-(2,4-Dichlorphenyl)-5-isopropyl-pyrazol-3-carbonsäureethylester (II-3), 1-(2,4-Dichlorphenyl)-5-(1,1-dimethyl-ethyl)pyrazol-3-carbonsäureethylester (II-4), 1-(2,4-Dichlorphenyl)-5-phenyl-pyrazol-3-carbonsäureethylester (II-5) und verwandte Verbindungen, wie sie in EP-A-0 333 131 und EP-A-0 269 806 beschrieben sind.
c) Verbindungen vom Typ der Triazolcarbonsäuren (d.h. der Formel (II), worin W = (W3) und (R¹⁷)_{n'} = 2,4-Cl₂ ist), vorzugsweise Verbindungen wie Fenchlorazol, d.h. 1-(2,4-Dichlorphenyl)-5-trichlormethyl-(1H)-1,2,4-triazol-3-carbonsäureethylester (II-6), und verwandte Verbindungen (siehe EP-A-0 174 562 und EP-A-0 346 620);
d) Verbindungen vom Typ der 5-Benzyl- oder 5-Phenyl-2-isoxazolin-3-carbonsäure oder der 5,5-Diphenyl-2-isoxazolin-3-carbonsäure, (worin W = (W4) ist), vorzugsweise Verbindungen wie 5-(2,4-Dichlorbenzyl)-2-isoxazolin-3-carbonsäureethylester (II-7) oder 5-Phenyl-2-isoxazolin-3-carbonsäureethylester (II-8) und verwandte Verbindungen, wie sie in WO-A-91/08202 beschrieben sind, oder der 5,5-Diphenyl-2-isoxazolincarbonsäureethylester (II-9) oder -n-propylester (II-10) oder der 5-(4-Fluorphenyl)-5-phenyl-2-isoxazolin-3-carbonsäureethylester (II-11), wie sie in der WO-A-95/07897 beschrieben sind.
e) Verbindungen vom Typ der 8-Chinolinoxyessigsäure, z.B. solche der Formel (III), worin (R¹⁹)_{n'} = 5-Cl, Wasserstoff, R²⁰ = OR²⁴ und T = CH₂ ist,
   vorzugsweise die Verbindungen (5-Chlor-8-chinolinoxy)essigsäure-(1-methylhexyl)-ester (III-1, Cloquintocet),
   (5-Chlor-8-chinolinoxy)essigsäure-(1,3-dimethy)-but-1-yl)-ester (III-2),
   (5-Chlor-8-chinolinoxy)essigsäure-4-allyl-oxy-butylester (III-3),
   (5-Chlor-8-chinolinoxy)essigsäure-1-allyloxy-prop-2-ylester (III-4),
   (5-Chlor-8-chinolinoxy)essigsäureethylester (III-5),
   (5-Chlor-8-chinolinoxy)essigsäuremethylester (III-6),
   (5-Chlor-8-chinolinoxy)essigsäureallylester (III-7),
   (5-Chlor-8-chinolinoxy)essigsäure-2-(2-propyliden-iminoxy)-1-ethylester (III-8),
   (5-Chlor-8-chinolinoxy)essigsäure-2-oxo-prop-1-ylester (III-9)
   und verwandte Verbindungen, wie sie in EP-A-0 860 750, EP-A-0 094 349 und EP-A-0 191 736 oder EP-A-0 492 366 beschrieben sind.
f) Verbindungen vom Typ der (5-Chlor-8-chinolinoxy)-malonsäure, d.h. der Formel (III), worin (R¹⁷)_{n'} = 5-Cl, R²⁰= OR²⁴, T = -CH(COO-Alkyl)- ist, vorzugsweise die Verbindungen (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
g) Verbindungen vom Typ der Dichloracetamide, d.h. der Formel (IV), vorzugsweise:
   N,N-Diallyl-2,2-dichloracetamid (Dichlormid, aus US-A 4,137,070),
   4-Dichloracetyl-3,4-dihydro-3-methyl-2H-1,4-benzoxazin (Benoxacor, aus EP 0 149 974),
   N1,N2-Diallyl-N2-dichloracetylglycinamid (DKA-24, aus HU 2143821),
   4-Dichloracetyl-1-oxa-4-aza-spiro[4,5]decan (AD-67),
   2,2-Dichlor-N-(1,3-dioxolan-2-ylmethyl)-N-(2-propenyl)acetamid (PPG-1292),
   3-Dichloracetyl-2,2,5-trimethyloxazolidin,
   3-Dichloracetyl-2,2-dimethyl-5-phenyloxazolidin,
   3-Dichloracetyl-2,2-dimethyl-5-(2-thienyl)oxazolidin,
   3-Dichloracetyl-5-(2-furanyl)-2,2-dimethyloxazolidin (Furilazole, MON 13900),
   1-Dichloracetyl-hexahydro-3,3,8a-trimethylpyrrolo[1,2-a]pyrimidin-6(2H)-on (Dicyclonon, BAS 145138).

Bevorzugte Gruppen von Herbiziden der Formel (I) sind in der folgenden Tabellen 6 aufgeführt.

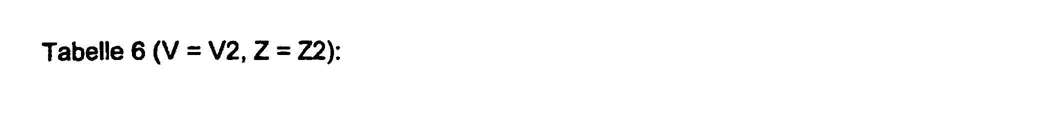

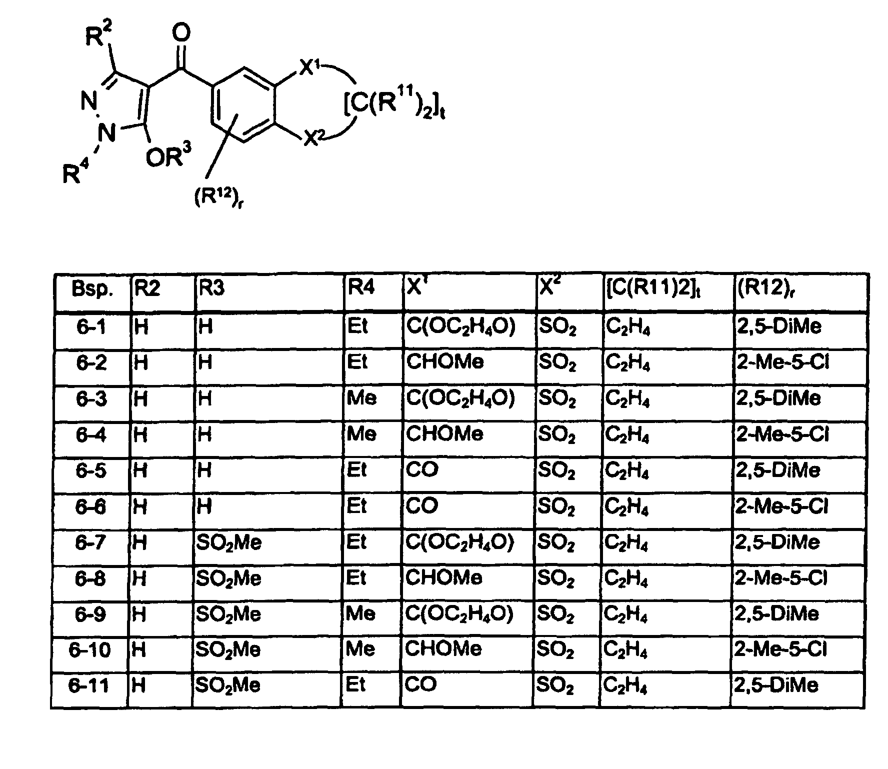

Die Safener (Antidote) der Formeln (II) - (IV) reduzieren oder unterbinden phytotoxische Effekte, die beim Einsatz der herbiziden Wirkstoffe der Formel (I) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Mais und andere Kulturen ausgedehnt werden, in denen bisher ein Einsatz der Herbizide nicht möglich oder nur beschränkt, das heißt, in niedrigen Dosierungen mit wenig Breitenwirkung möglich war.
Die herbiziden Wirkstoffe und die erwähnten Safener können zusammen (als fertige Formulierung oder im Tank-mix-Verfahren) oder in beliebiger Reihenfolge nacheinander ausgebracht werden. Das Gewichtsverhältnis Safener: herbizider Wirkstoff kann innerhalb weiter Grenzen variieren und ist vorzugsweise im Bereich von 1:100 bis 100:1, insbesondere von 1:10 bis 10:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch einfache, routinemäßige Vorversuche ermitteln.

Haupteinsatzgebiete für die Anwendung der erfindungsgemäße Kombinationen sind vor allem Mais und Getreidekulturen wie z.B. Weizen, Roggen, Gerste, Hafer, Reis, Sorghum, aber auch Baumwolle und Sojabohne, vorzugsweise Getreide, Reis und Mais.

Die erfindungsgemäß eingesetzten Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden der Formel (I), das dadurch gekennzeichnet ist, daß eine antidotisch wirksame Menge einer Verbindung der Formel (II), (III) und (IV) vor, nach oder gleichzeitig mit dem herbiziden Wirkstoff A der Formel (I) auf die Pflanzen, Pflanzensamen oder die Anbaufläche appliziert wird.

Die erfindungsgemäße Herbizid-Safener Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Kombination zur Bekämpfung von Schadpflanzen in transgenen Kulturpflanzen.

Die Safener der Formeln (II) - (IV) und deren Kombinationen mit einem oder mehreren der genannten herbiziden Wirkstoffe der Formel (I) können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugsund Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen als Pflanzenschutzmitteln wirksamen Stoffen, wie Insektiziden, Akariziden, Herbiziden, Fungiziden, sowie mit Safenem, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen, wie Hammermühlen, Gebläsemühlen und Luftstrahlmühlen, feingemahlen und gleichzeitig oder anschließend mit den Formulierungshilfsmitteln vermischt.

Emulgierbare Konzentrate werden z.B. durch Auflösen des Wirkstoffes in einem organischen Lösungsmittel, wie Butanol, Cyclohexanon, Dimethylformamid oder auch höhersiedende Kohlenwasserstoffe wie gesättigte oder ungesättigte Aliphaten oder Alicyclen, Aromaten oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze, wie Ca-dodecylbenzolsulfonat, oder nichtionische Emulgatoren, wie Fettsäurepolyglykolester, Alkylarylpolyglykolether, Fettalkoholpolyglykolether, Propylenoxid-Ethylenoxid-Kondensationsprodukte, Alkylpolyether, Sorbitanester, wie Sorbitanfettsäureester, oder Polyoxethylensorbitanester, wie Polyoxyethylensorbitanfettsäureester. Stäubemittel erhält man im allgemeinen durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Emulsionen, z.B. Öl-in-Wasser-Emulsionen (EW), lassen sich beispielsweise mittels Rührem, Kolloidmühlen und/oder statischen Mischern unter Verwendung von wäßrigen organischen Lösungsmitteln und gegebenenfalls Tensiden, wie sie z.B. bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen, wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren, wie Sprühtrocknung, Wirbelbett-Granulierung, Teller-Granulierung, Mischung mit Hochgeschwindigkeitsmischem und Extrusion ohne festes Inertmaterial, hergestellt.

Zur Herstellung von Teller-, Fließbett-, Extruder- und Sprühgranulaten siehe z.B. in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B.

G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gew.-%, insbesondere 0,1 bis 95 Gew.-%, Wirkstoffe der Formel (II) - (IV) oder des Herbizid/Antidot-Wirkstoffgemischs (I) und (II) - (IV) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Wirkstoffkonzentration etwa 1 bis 80 Gew.-%. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Als Kombinationspartner für die erfindungsgemäßen Mischungen aus Herbiziden und Safenem in Mischungsformulierungen oder im Tank-Mix sind beispielsweise bekannte Wirkstoffe einsetzbar, wie sie in z.B. Weed Research 26, 441-445 (1986), oder "The Pesticide Manual", 10th edition, The British Crop Protection Council, 1994, und dort zitierter Literatur beschrieben sind. Als literaturbekannte Herbizide, die mit den erfindungsgemäßen Mischungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):
acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amidosulfuron; amitrol; AMS, d.h. Ammoniumsulfamat; anilofos; asulam; atrazin; azafenidine (DPX-R6447), azimsulfuron (DPX-A8947); aziprotryn; barban; BAS 516 H, d.h. 5-Fluor-2-phenyt-4H-3,1-benzoxazin-4-on; benazolin; benfluralin; benfuresate; bensulfuronmethyl; bensulide; bentazone; benzofluor, benzoylprop-ethyl; benzthiazuron; bialaphos; bifenox; bispyribac-natrium (KIH-2023), bromacil; bromobutide; bromofenoxim; bromoxynil; bromuron; buminafos; busoxinone; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; chloransulam-methyl (XDE-565), chlorazifop-butyl, chlorbromuron; chlorbufam; chlortenac; chlorflurecol-methyl; chloridazon; chlorimuron ethyl; chtomitrofen; chlorotoluron; chloroxuron; chlorpropham; chlorsulfuron; chlorthaldimethyl; chlorthiamid; cinidon-ethyl, cinmethylin; cinosulfuron; clefoxydim, clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 014); cycloxydim; cycluron; cyhalofop und dessen Esterderivate (z.B. Butylester, DEH-112); cyperquat; cyprazine; cyprazole; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenican; diflufenzopyr-natrium (SAN-835H), dimefuron; dimethachlor, dimethametryn; dimethenamid (SAN-582H); dimethazone, 5-(4,6-Dimethylpyrimidin-2-yl-carbamoylsulfamoyl)-1-(2-pyridyl)-pyrazol-4-carbonsäuremethylester (NC-330); clomazon; dimethipin; dimetrasulfuron, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; epoprodan (MK-243), EPTC; esprocarb; ethalfluralin; ethametsulfuron-methyl; ethidimuron; ethiozin; ethofumesate; F5231, d.h. N-[2-Chlor-4-fluor 5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); ethoxysulfuron (aus EP 342569) etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)hamstoff (EP-A 079 683);
3-(4-Ethyl-6-methoxy-1,3,5-triazin-2-yl)-1-(2,3-dihydro-1,1-dioxo-2-methylbenzo[b]thiophen-7-sulfonyl)hamstoff (EP-A 079 683); fenoprop; fenoxan, fenoxaprop und fenoxaprop-P sowie deren Ester, z.B. fenoxaprop-P-ethyl und fenoxaprop-ethyl; fenoxydim; fentrazamide (NBA-061); fenuron; flamprop-methyl; flazasulfuron; flufenacet (BAY-FOE-5043), fluazifop und fluazifop-P, florasulam (DE-570) und deren Ester, z.B. fluazifop-butyl und fluazifop-P-butyl; fluazolate (Mon-48500), fluchloralin; flucarbazone-natrium; flumetsulam; flumeturon; flumiclorac und dessen Ester (z.B. Pentylester, S-23031); flumioxazin (S-482); flumipropyn; flupoxam (KNW-739); fluorodifen; fluoroglycofen-ethyl; flupropacil (UBIC-4243); flupyrsulfuron-methyl natrium (DPX-KE459), fluridone; flurochloridone; fluroxypyr; flurtamone; fluthiacet-methyl (KIH-9201 ), fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen Ester, hexazinone; imazamethabenz-methyl; imazamox (AC-299263), imazapyr; imazaquin und Salze wie das Ammoniumsalz; imazethamethapyr; imazethapyr; imazosulfuron; iodosulfuron (Methyl-4-iod-2-[3-(4-methoxy-6-methyl-1,3,5-triazin-2-yl)ureidosulfonyl]-benzoat, Natriumsalz, WO 92/13845); ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor, methabenzthiazuron; metham; methazole; methoxyphenone; methyldymron; metobenzuron, Methyl-2-[3-(4,6-dimethoxypyrimidin-2-yl)ureidosulfonyl]-4-methansulfonamidomethylbenzoat (WO 95/10507); methobenzuron; metobromuron; metolachlor, S-metolachlor, metosulam (XRD 511); metoxuron; metribuzin; metsulfuron-methyl; MH; molinate; monalide; monocarbamide dihydrogensulfate; monolinuron; monuron;
MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; N,N-Dimethyl-2-[3-(4,6-dimethoxypyrimidin-2-yl)ureidosulfonyl]-4-formylamino-benzamid (WO 95/01344); naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrofluorfen; norflurazon; orbencarb; oryzalin; oxadiargyl (RP-020630); oxadiazon; oxaziclomefone (MY-100), oxyfluorfen; oxasulfuron (CGA-277476), paraquat; pebulate; pendimethalin; pentoxazone (KPP-314), perfluidone; phenisopham; phenmedipham; picloram; piperophos; piributicarb; pirifenop-butyl; pretilachlor, primisulfuron-methyl; pracarbazone-natrium; procyazine; prodiamine; profluralin; proglinazine-ethyl; prometon; prometryn; propachlor; propanil; propaquizafop und dessen Ester; propazine; propham; propisochlor, propyzamide; prosulfalin; prosulfocarb; prosulfuron (CGA-152005); prynachlor; pyraflufen-ethyl (ET-751), pyrazon; pyrazosulfuron-ethyl; pyrazoxyfen; pyribenzoxim, pyridafol; pyridate; pyriminobac-methyl (KIH-6127), pyrithiobac (KIH-2031); pyroxofop und dessen Ester (z.B. Propargylester); quinclorac; quinmerac; quinofop und dessen Esterderivate, quizalofop und quizalofop-P und deren Esterderivate z.B. quizalofopethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und - methylester, sulfentrazon (FMC-97285, F-6285); sulfazuron; sulfometuron-methyl; sulfosate (ICI-A0224); sulfosulfuron (MON-37500), TCA; tebutam (GCP-5544); tebuthiuron; tepraloxydim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiazafluron; thiazopyr (Mon-13200); thidiazimin (SN-124085); thifensulfuron-methyl; thiobencarb; thiocarbazil; tralkoxydim; tri-allate; triasulfuron, triaziflam (DH-1105); triazofenamide; tribenuron-methyl; triclopyr; tridiphane; trietazine; trifluralin; triflusulfuron und Ester (z.B. Methylester, DPX-66037); trimeturon; tsitodef; vernolate; WL 110547, d.h. 5-Phenoxy-1-[3-(trifluormethyl)-phenyl]-1H-tetrazol; UBH-509; D-489; LS 82-556; KPP-300; KPP-421, MT-146, NC-324; KH-218; DPX-N8189; DOWCO-535; DK-8910; V-53482; PP-600; MBH-001.

Zur Anwendung werden die in handelsüblicher Form vorliegenden Formulierungen gegebenenfalls in üblicher Weise verdünnt z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids, u.a. variiert die erforderliche Aufwandmenge der Herbizide der Formel (I). Sie kann innerhalb weiter Grenzen variiert werden, z.B. zwischen 0,001 und 10,0 kg/ha oder mehr Aktivsubstanz, vorzugsweise liegt sie jedoch zwischen 0,005 und 5 kg/ha.

Folgende Beispiele dienen zur Erläuterung der Erfindung:
A. Formulierungsbeispiele
a) Ein Staubmittel wird erhalten, indem man 10 Gew.-Teile einer Verbindung der Formel (II) ― (IV) oder eines Wirkstoffgemischs aus einem herbiziden Wirkstoff der Formel (I) und einem Safener der Formel (II) ― (IV) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung der Formel (II), (III), (IV)) oder eines Wirkstoffgemischs aus einem herbiziden Wirkstoff der Formel (I) und einem Safener der Formel (II), (III), (IV), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
a) Ein in Wasser leicht dispergierbares Dispersionskonzentrat wird erhalten, indem man 20 Gewichtsteile einer Verbindung der Formel (II) ― (IV) oder eines Wirkstoffgemischs aus einem herbiziden Wirkstoff der Formel (I) und einem Safener der Formel (II) ― (IV), 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277°C) mischt und in einer Reibkugelmühle auf eine Feinheit von unter 5 Mikron vermahlt.
d) Ein emulgierbares Konzentrat wird erhalten aus 15 Gew.-Teilen einer Verbindung der Formel (II) ― (IV) oder eines Wirkstoffgemischs aus einem herbiziden Wirkstoff der Formel (I) und einem Safener der Formel (II) ― (IV), 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man

| | |
|---|---|
| 75 Gew.-Teile | einer Verbindung der Formel (II) ― (IV) oder eines Wirkstoffgemischs aus einem herbiziden Wirkstoff der Formel (I) und einem Safener der Formel (II) ― (IV) |
| 10 " | ligninsulfonsaures Calcium, |
| 5 " | Natriumlauryisulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man

| | |
|---|---|
| 25 Gew.-Teil(e) | einer Verbindung der Formel (II) ― (IV) oder eines Wirkstoffgemischs aus einem herbiziden Wirkstoff der Formel (I) und einem Safener der Formel (II) ― (IV) |
| 5 " | 2,2'-dinaphthylmethan-6,6'-disuifonsaures Natrium, |
| 2 " | oleoylmethyltaurinsaures Natrium, |
| 1 " | Polyvinylalkohol, |
| 17 " | Calciumcarbonat und |
| 50 " | Wasser |

auf einer Kolloidmühle homogensiert und vorzericleinert, anschließend auf einer Perimühle mahlt und die so erhaltene Suspension in einem Sprühturm mittels einer Einstoffdüse zerstäubt und trocknet.

### Biologische Beispiele

### 1. Bonitierung der Schadwirkung

Die Schadwirkung an den Pflanzen wird nach einer Skala von 0-100 % optisch im Vergleich zu Kontrollpflanzen bewertet:
- 0% =: keine erkennbare Wirkung im Vergleich zur unbehandelten Pflanze,
- 100% =: behandelte Pflanze stirbt ab.

### 2. Herbizidwirkung und Safenerwirkung im Vorauflauf

Samen von mono- und dikotylen Unkrautpflanzen sowie von Kulturpflanzen werden in Plastiktöpfen von 9 cm Durchmesser in sandiger Lehmerde ausgelegt und mit Erde abgedeckt. Alternativ werden für den Test unter Bedingungen für Paddy-Reis im Reisanbau vorkommende Unkräuter im mit Wasser gesättigten Boden kultiviert, wobei so viel Wasser in die Töpfe gefüllt wird, daß das Wasser bis zur Bodenoberfläche oder einige Millimeter darüber steht. Die in Form von Emulsionskonzentraten formulierten erfindungsgemäßen Herbizid-Safener-Wirkstoffkombinationen sowie in parallelen Versuchen die entsprechend formulierten Einzelwirkstoffe werden dann als Emulsionen mit einer Wasseraufwandmenge von umgerechnet 300 l/ha, in unterschiedlichen Dosierungen auf die Oberfläche der Abdeckerde appliziert oder beim Reis ins Bewässerungswasser gegossen.

Nach der Behandlung werden die Töpfe im Gewächshaus aufgestellt und unter guten Wachstumsbedingungen gehalten. Die optische Bonitur der Pflanzen- bzw. der Auflaufschäden erfolgt nach dem Auflaufen der Versuchspflanzen nach einer Versuchszeit von 3-4 Wochen im Vergleich zu unbehandelten Kontrollen. Wie die Versuche zeigen, weisen die erfindungsgemäßen herbiziden Mittel eine gute herbizide Vorauflaufwirkung gegen ein breites Spektrum von Ungräsem und Unkräutern auf, wobei Schäden an Kulturpflanzen wie Mais, Reis, Weizen oder Gerste oder anderem Getreide im Vergleich zur Anwendung der einzelnen Herbizide ohne Safener wesentlich reduziert sind, d.h. um 30% bis zu 100% weniger Herbizidschäden aufweisen.

### 3. Herbizidwirkung und Safenerwirkung im Nachauflauf

Samen von mono- und dikotylen Unkrautpflanzen und von Kulturpflanzen werden in Plastiktöpfen in sandiger Lehmerde ausgelegt, mit Erde abgedeckt und im Gewächshaus unter guten Wachstumsbedingungen angezogen. Alternativ werden für den Test unter Bedingungen für Paddy-Reis im Reisanbau vorkommende Unkräuter und Reis in Töpfen angezogen, in denen Wasser bis zu 2 cm über der Bodenoberfläche steht, und während der Wachstumsphase kultiviert. Ca, drei Wochen nach der Aussaat werden die Versuchspflanzen im Dreiblattstadium behandelt. Die als Emulsionskonzentrate formulierten erfindungsgemäßen Herbizid-Safener-Wirkstoffkombinationen sowie in parallelen Versuchen die entsprechend formulierten Einzelwirkstoffe werden in verschiedenen Dosierungen mit einer Wasseraufwandmenge von umgerechnet 300 l/ha auf die grünen Pflanzenteile gesprüht und nach 3 Wochen Standzeit der Versuchspflanzen im Gewächshaus unter optimalen Wachstumsbedingungen die Wirkung der Präparate optisch im Vergleich zu unbehandelten Kontrollen bonitiert. Bei Reis oder bei Unkräutern, die im Reisanbau vorkommen, werden die Wirkstoffe auch direkt ins Bewässerungswasser gegeben (Applikation in Analogie zur sogenannten Granulatanwendung) oder auf Pflanzen und ins Bewässerungswasser gesprüht. Wie die Versuche, insbesondere die in den Tabellen 17 und 18 widergegebenen, zeigen, weisen die erfindungsgemäßen herbiziden Mittel eine gute herbizide Nachauflaufwirkung gegen ein breites Spektrum von Ungräsem und Unkräutern auf, wobei Schäden an Kulturpflanzen wie Mais, Reis, Weizen oder Gerste oder anderem Getreide im Vergleich zur Anwendung der einzelnen Herbizide ohne Safener wesentlich reduziert sind, d.h. um 30% bis zu 100% weniger Herbizidschäden aufweisen.

## Patentansprüche

1. Herbizid wirksames Mittel, enthaltend eine Mischung aus
A. einer herbizid wirksamen Menge an einer oder mehreren Verbindungen der Formel (I) 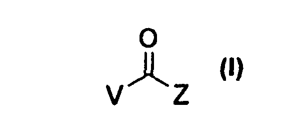 worin
V der Rest (V2) ist, 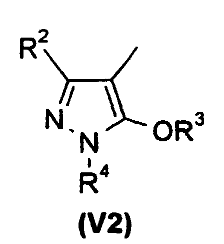 wobei die Symbole und Indizes folgende Bedeutungen haben:
R² ist Wasserstoff, (C₁-C₄)Alkyl, (C₁-C₄)Alkoxy, (C₁-C₄)Haloalkyl, Halogen, (C₁-C₄)Haloalkoxy, Cyano, Nitro;
R³ ist Wasserstoff oder ein (C₁-C₄)kohlenstoffhaltiger Rest wie (C₁-C₄)Alkyl, (C₂-C₄)Alkenyl, (C₂-C₄)Alkinyl, (C₁-C₄)Haloalkyl, (C₁-C₄)Alkoxy-(C₁-C₄)alkyl, (C₁-C₄)Alkylcarbonyl, (C₁-C₄)Alkylsulfonyl, (C₁-C₄)Haloalkylsulfonyl, Arylsulfonyl, Arylcarbonyl-(C₁-C₄)alkyl, Aryl-(C₁-C₄)alkyl;
R⁴ ist Wasserstoff oder ein (C₁-C₇)kohlenstoffhaltiger Rest wie (C₁-C₄)Alkyl, (C₂-C₄)Alkenyl, (C₂-C₄)Alkinyl, (C₁-C₄)Haloalkyl, Phenyl, Benzyl;
und Z ist der Rest (Z2), 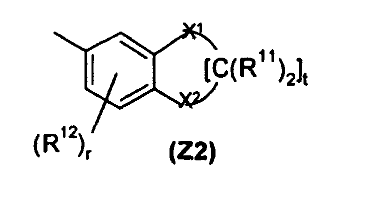
wobei die Symbole und Indizes folgende Bedeutungen haben:
R¹¹ ist gleich oder verschieden Wasserstoff, (C₁-C₄)Alkyl, Halogen;
R¹² ist gleich oder verschieden (C₁-C₄)Alkyl, (C₂-C₄)Alkenyl, (C₂-C₄)Alkinyl, Halogen, (C₁-C₄)Haloalkyl, (C₂-C₄)Haloalkenyl, (C₂-C₄)Haloalkinyl, (C₁-C₄)Haloalkoxy, (C₁-C₄)Haloalkylthio, (C₁-C₄)Alkoxycarbonyl, (C₁-C₄)Alkylsulfonyl, (C₁-C₄)Haloalkylsulfonyl, (C₁-C₄)Alkylsulfinyl, (C₁-C₄)Haloalkylsulfinyl, (C₁-C₄)Alkylthio, (C₁-C₄)Alkoxy, (C₁-C₄)Alkylcarbonyl, (C₁-C₄)Alkylaminosulfonyl, (C₁-C₄)Dialkylaminosulfonyl, (C₁-C₄)Alkylcarbamoyl, (C₁-C₄)Dialkylcarbamoyl, (C₁-C₄)Alkoxyalkyl, Phenoxy, Nitro, Cyano, Aryl, Di-(C₁-C₄)alkylphosphono-(C₁-C₄)alkyl;
r ist 0, 1, 2 oder 3;
t ist 1 oder 2;
X¹ ist O, CR¹⁴R¹⁵, CHOH, C=O, C=NO(C₁-C₄)Alkyl;
X² ist O, S, SO, SO₂, CH₂, NH, N(C₁-C₄)Alkyl, NSO₂(C₁-C₄)Alkyl;
R¹⁴, R¹⁵ ist gleich oder verschieden Wasserstoff, (C₁-C₄)Alkyl, (C₁-C₄)Alkoxy, (C₁-C₄)Haloalkoxy, (C₁-C₄)Alkylthio, (C₁-C₄)Haloalkylthio oder R¹⁴ und R¹⁵ bilden zusammen eine der Gruppen -O-(CH₂)₂-O-, -O-(CH₂)₃-O-, S-(CH₂)₂-S-, -S-(CH₂)₃-S-, -(CH₂)₄-, -(CH₂)₅-;
und
B. einer antidotisch wirksamen Menge an einer oder mehreren Verbindungen aus der Gruppe a)
a) Verbindungen der Formeln (II) bis (IV), 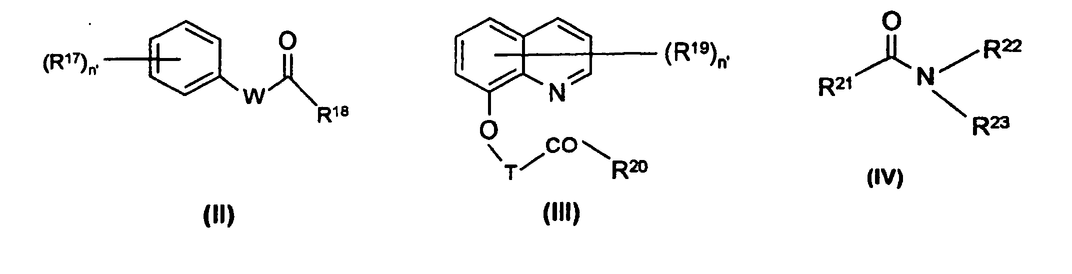 wobei die Symbole und Indizes folgende Bedeutungen haben:
n' ist eine natürliche Zahl von 1 bis 5, vorzugsweise 1 bis 3
T ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist,
W ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-Atom und höchstens ein O-Atom im Ring enthalten ist;
m' ist 0 oder 1;
R¹⁷, R¹⁹ sind gleich oder verschiedenWasserstoff, Halogen, (C₁-C₄)Alkyl, (C₁-C₄)Alkoxy, Nitro oder (C₁-C₄)Haloalkyl;
R¹⁸, R²⁰ sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, der über das N-Atom mit der Carbonylgruppe in (II) bzw. (III) verbunden ist und unsubstituiert oder durch Reste aus der Gruppe (C₁-C₄)Alkyl, (C₁-C₄)Alkoxy oder gegebenenfalls substituiertes Phenyl substituiert ist;
R²⁴ ist Wasserstoff oder ein unsubstituierter oder substituierter aliphatischer Kohlenwasserstoffrest;
R²⁵ ist Wasserstoff, (C₁-C₆)Alkyl, (C₁-C₆)Alkoxy oder substituiertes oder unsubstituiertes Phenyl;
R²⁶ ist Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkyl-silyl;
R²⁷, R²⁸, R²⁹ sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl;
R²¹ ist (C₁-C₄)Alkyl, (C₁-C₄)Haloalkyl, (C₂-C₄)Alkenyl, (C₂-C₄)Haloalkenyl, (C₃-C₇)Cycloalkyl;
R²², R²³ ist gleich oder verschieden Wasserstoff, (C₁-C₄)Alkyl, (C₂-C₄)Alkenyl, (C₂-C₄)Alkinyl, (C₁-C₄)Haloalkyl, (C₂-C₄)Haloalkenyl, (C₁-C₄)Alkylcarbamoyl-(C₁-C₄)alkyl, (C₂-C₄)Alkenylcarbamoyl-(C₁-C₄)alkyl, (C₁-C₄)Alkoxy-(C₁-C₄)alkyl, Dioxolanyl-(C₁-C₄)alkyl, Thiazolyl, Furyl, Furylalkyl, Thienyl, Piperidyl, substituiertes oder unsubstituiertes Phenyl, oder R²² und R²³ bilden zusammen einen substituierten oder unsubstituierten heterocyclischen Ring;
einschließlich der Stereoisomeren und in der Landwirtschaft gebräuchliche Salze.

2. Herbizides Mittel gemäß Anspruch 1, **gekennzeichnet durch** eine Verbindung der Formel (I), worin die Symbole und Indizes folgende Bedeutungen haben:
R² ist Wasserstoff;
R³ ist Wasserstoff, (C₁-C₄) Alkyl, Arylsulfonyl, Benzyl;
R⁴ ist (C₁-C₄)Alkyl;
R¹¹ ist (C₁-C₄)Alkyl;
R¹² ist (C₁-C₄)Alkyl, Halogen, (C₁-C₄)Haloalkyl, (C₁-C₄)Alkylsulfonyl, (C₁-C₄)Alkoxycarbonyl;
r ist 0, 1, 2 oder 3;
t ist 1 oder 2;
X¹ ist O, CR¹⁴R¹⁵, CHOH, C=O, C=NO(C₁-C₄)Alkyl;
X² ist SO₂;
R¹⁴, R¹⁵ ist gleich oder verschieden Wasserstoff, (C₁-C₄)Alkyl, (C₁-C₄)Alkoxy, (C₁-C₄)Haloalkoxy, (C₁-C₄)Alkylthio, (C₁-C₄)Haloalkylthio oder R¹⁴ und R¹⁵ bilden zusammen eine der Gruppen -O-(CH₂)₂-O-, -O-(CH₂)₃-O-, S-(CH₂)₂-S-, -S-(CH₂)₃-S-, -(CH₂)₄-, -(CH₂)₅-;
R²³ ist (C₁-C₂)Alkyl,

3. Herbizides Mittel gemäß Anspruch 1 oder 2, **dadurch gekennzeichnet, daß** W in der Formel (II) einen Rest aus der Gruppe (W1) bis (W4) bedeutet, 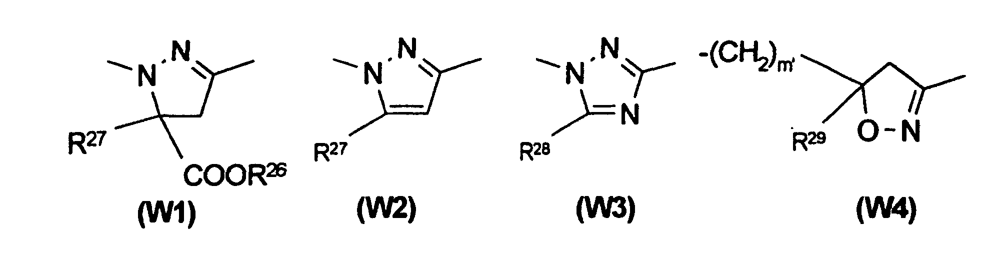 wobei die Symbole und Indizes folgende Bedeutungen haben:
m' ist 0 oder 1;
R²⁶ ist Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkyl-silyl;
R²⁷, R²⁸, R²⁹ sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl.

4. Herbizides Mittel gemäß einem oder mehreren der Ansprüche 1 bis 3, enthaltend Safener der Formel (II) und/oder (III) bei denen die Symbole und Indizes folgende Bedeutungen haben:
R¹⁸, R²⁰ ist ―O-R²⁴;
R²⁴ ist Wasserstoff, (C₁-C₁₈)-Alkyl, (C₃-C₁₂)-Cycloalkyl, (C₂-C₈)-Alkenyl und (C₂-C₁₈)Alkinyl, wobei die C-haltigen Gruppen durch einen oder mehrere, R⁵⁰ substituiert sein können;
R⁵⁰ ist gleich oder verschieden, Halogen, Hydroxy, (C₁-C₈)-Alkoxy, (C₁-C₈)Alkylthio, (C₂-C₈)Alkenylthio, (C₂-C₈)Alkinyithio, (C₂-C₈)Alkenyloxy, (C₂-C₈)Alkinyloxy, (C₃-C₇)Cycloalkyl, (C₃-C₇)Cycloalkoxy, Cyano, Mono- und Di-(C₁-C₄)-alkyl)-amino, Carboxy, (C₁-C₈)Alkoxycarbonyl, (C₂-C₈)Alkenyloxycarbonyl, (C₁-C₈)Alkylthiocarbonyl, (C₂-C₈)Alkinyloxycarbonyl, (C₁-C₈)Alkylcarbonyl, (C₂-C₈)Alkenylcarbonyl, (C₂-C₈)Alkinylcarbonyl, 1-(Hydroxyimino)-(C₁-C₆)-alkyl, 1-[(C₁-C₄)Alkylimino]-(C₁-C₄)-alkyl, 1-[(C₁-C₄)Alkoxyimino)-(C₁-C₆)-alkyl, (C₁-C₈)Alkylcarbonylamino, (C₂-C₈)Alkenylcarbonylamino, (C₂-C₈)Alkinylcarbonylamino, Aminocarbonyl, (C₁-C₈)Alkylaminocarbonyl, Di-(C₁-C₆)-alkylaminocarbonyl, (C₂-C₆)Alkenylaminocarbonyl, (C₂-C₆)Alkinylaminocarbonyl, (C₁-C₈)Alkoxycarbonylamino, (C₁-C₈)Alkylaminocarbonylamino, (C₁-C₆)Alkylcarbonyloxy, das unsubstituiert oder durch R⁵¹ substituiert ist, (C₂-C₆)Alkenylcarbonyloxy, (C₂-C₆)Alkinylcarbonyloxy, (C₁-C₈)Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, durch Reste R⁵² substituiert sind; SiR'₃, -O-SiR'₃, R'₃Si-(C₁-C₈)-alkoxy, -CO-O-NR'₂, -O-N=CR'₂, -N=CR'₂, -O-NR'₂, -NR'₂, CH(OR')₂, -O-(CH₂)ₘ-CH(OR')₂, -CR'''(OR')₂, -O-(CH₂)ₘCR'''(OR")₂ oder durch R"O-CHR'''CHCOR"-(C₁-C₆)-alkoxy,
R⁵¹ ist gleich oder verschieden Halogen, Nitro, (C₁-C₄)Alkoxy und unsubstituiertes oder mit einem oder mehreren, Resten R⁵² substituiertes Phenyl;
R⁵² ist gleich oder verschieden Halogen, (C₁-C₄)Alkyl, (C₁-C₄)Alkoxy, (C₁-C₄)Haloalkyl, (C₁-C₄)-Haloalkoxy oder Nitro;
R' ist gleich oder verschieden Wasserstoff, (C₁-C₄)Alkyl, unsubstituiertes oder durch einen oder mehrere, Reste R⁵² substituiertes Phenyl oder zwei Reste R' bilden zusammen eine (C₂-C₆)Alkandiylkette;
R" ist gleich oder verschieden (C₁-C₄)Alkyl oder zwei Reste R" bilden zusammen eine (C₂-C₆)Alkandiylkette;
R''' ist Wasserstoff oder (C₁-C₄)Alkyl;
m ist 0, 1, 2, 3, 4, 5 oder 6.

5. Herbizides Mittel gemäß einem oder mehreren der Ansprüche 1 bis 4, enthaltend Safener der Formel (II) und/oder (III), bei denen die Symbole und Indizes folgende Bedeutungen haben:
R²⁴ ist Wasserstoff, (C₁-C₈)Alkyl oder (C₃-C₇)Cycloalkyl, wobei die vorstehenden C-haltigen Reste unsubstituiert sind oder ein- oder mehrfach durch Halogen oder ein- oder zweifach, durch Reste R⁵⁰ substituiert sind,
R⁵⁰ ist gleich oder verschieden Hydroxy, (C₁-C₄)Alkoxy, Carboxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)-alkyl, 1-[(C₁-C₄)Alkylimino]-(C₁-C₄)-alkyl und 1-[(C₁-C₄)Alkoxyimino]-(C₁-C₄)-alkyl; -SiR'₃, -O-N=CR'₂, -N=CR'₂, -NR'₂, und - O-NR'₂, worin R' gleich oder verschieden Wasserstoff, (C₁-C₄)Alkyl oder paarweise eine (C₄-C₅)Alkandiylkette bedeutet,
R²⁷, R²⁸, R²⁹ sind gleich oder verschieden Wasserstoff, (C₁-C₈)Alkyl, (C₁-C₆)Haloalkyl, (C₃-C₇)Cycloalkyl oder Phenyl, das unsubstituiert oder durch einen oder mehrere Reste aus der Gruppe Halogen, Cyano, Nitro, Amino, Mono- und Di-[(C₁-C₄)alkyl]-amino, (C₁-C₄)Alkyl, (C₁-C₄)Haloalkyl, (C₁-C₄)Alkoxy, (C₁-C₄)Haloalkoxy, (C₁-C₄)Alkylthio und (C₁-C₄)Alkylsulfonyl substituiert ist;
R²⁶ ist Wasserstoff, (C₁-C₈)Alkyl, (C₁-C₈)Haloalkyl, (C₁-C₄)-Alkoxy)-(C₁-C₄)-alkyl, (C₁-C₆)Hydroxyalkyl, (C₃-C₇)Cycloalkyl oder Tri-(C₁-C₄)-alkylsilyl bedeutet,
R¹⁷, R¹⁹ sind gleich oder verschieden Wasserstoff, Halogen, Methyl, Ethyl, Methoxy, Ethoxy, (C₁ oder C₂)-Haloalkyl.

6. Herbizides Mittel gemäß einem oder mehreren der Ansprüche 1 bis 5, enthaltend einen Safener der Formel (II), wobei die Symbole und Indizes folgende Bedeutungen haben:
R¹⁷ ist Wasserstoff, Halogen, Nitro oder (C₁-C₄)Haloalkyl;
n ist 1, 2 oder 3;
R¹⁸ ist ein Rest der Formel OR²⁴,
R²⁴ ist Wasserstoff, (C₁-C₈)Alkyl oder (C₃-C₇)Cycloalkyl, wobei die vorstehenden C-haltigen Reste unsubstituiert sind oder ein- oder mehrfach, durch gleiche oder verschiedene Halogen-Reste oder bis zu zweifach, durch gleiche oder verschiedene Reste aus der Gruppe Hydroxy, (C₁-C₄)Alkoxy, (C₁-C₄)Alkoxycarbonyl, (C₂-C₆)Alkenyloxycarbonyl, (C₂-C₆)Alkinyloxycarbonyl, 1-(Hydroxyimino)-(C₁-C₄)-alkyl, 1-[(C₁-C₄)Alkylimino]-(C₁-C₄)-alkyl, 1-[(C₁-C₄)Alkoxyimino]-(C₁-C₄)-alkyl und Reste der Formeln -SiR'₃, -O-N=R'₂, - N=CR'₂, -NR'₂ und -O-NR'₂ substituiert sind, wobei die Reste R' in den genannten Formeln gleich oder verschieden Wasserstoff, (C₁-C₄)Alkyl oder paarweise (C₄ oder C₅)Alkandiyl bedeuten;
R²⁷, R²⁸, R²⁹ sind gleich oder verschieden Wasserstoff, (C₁-C₈)Alkyl, (C₁-C₆)Haloalkyl, (C₃-C₇)Cycloalkyl oder Phenyl, das unsubstituiert oder durch einen oder mehrere der Reste aus der Gruppe Halogen, (C₁-C₄)Alkyl, (C₁-C₄)Alkoxy, Nitro, (C₁-C₄)Haloalkyl und (C₁-C₄)Haloalkoxy substituiert ist, und
R²⁶ ist Wasserstoff, (C₁-C₈)Alkyl, (C₁-C₈)Haloalkyl, (C₁-C₄)Alkoxy-(C₁-C₄)-alkyl, (C₁-C₆)Hydroxyalkyl, (C₃-C₇)Cycloalkyl oder Tri-(C₁-C₄)-alkylsilyl.

7. Herbizides Mittel gemäß einem oder mehreren der Ansprüche 1 bis 6, **dadurch gekennzeichnet, daß** das Gewichtsverhältnis Herbizid:Safener 1:100 bis 100:1 beträgt.

8. Herbizides Mittel gemäß einem oder mehreren der Ansprüche 1 bis 7, **dadurch gekennzeichnet, daß** sie ein weiteres Herbizid enthält.

9. Herbizides Mittel gemäß Anspruch 8, **dadurch gekennzeichnet, daß** das weitere Herbizid ein Sulfonylharnstoff ist.

10. Verfahren zur Bekämpfung von Schadpflanzen in Kulturen, **dadurch gekennzeichnet, daß** man eine herbizid wirksame Menge an einer Herbizid-Safener-Kombination gemäß einem oder mehreren der Ansprüche 1 bis 9 auf die Schadpflanzen, Pflanzen, Pflanzensamen oder die Fläche, auf der die Pflanzen wachsen, aufbringt.

11. Verfahren gemäß Anspruch 10, **dadurch gekennzeichnet, daß** die Pflanzen aus der Gruppe Mais, Weizen, Roggen, Gerste, Hafer, Reis, Sorghum, Baumwolle und Soja stammen.

12. Verfahren gemäß Anspruch 10 oder 11, **dadurch gekennzeichnet, daß** die Pflanzen gentechnisch verändert sind.

## Claims

1. A herbicidally active composition comprising a mixture of
A. a herbicidally active amount of one or more compounds of the formula (I) 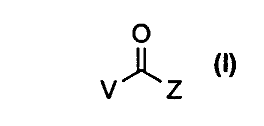 in which
V is the radical (V2), 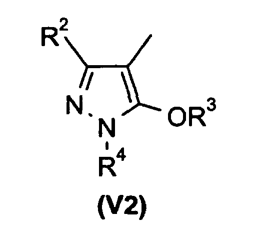 where the symbols and indices have the following meanings:
R² is hydrogen, (C₁-C₄)alkyl, (C₁-C₄)alkoxy, (C₁-C₄)haloalkyl, halogen, (C₁-C₄)haloalkoxy, cyano, nitro;
R³ is hydrogen or a (C₁-C₄)carbon-containing radical such as (C₁-C₄)alkyl, (C₂-C₄)alkenyl, (C₂-C₄)alkynyl, (C₁-C₄)haloalkyl, (C₁-C₄)alkoxy-(C₁-C₄)alkyl, (C₁-C₄)alkylcarbonyl, (C₁-C₄)alkylsulfonyl, (C₁-C₄)haloallcylsulfonyl, arylsulfonyl, arylcarbonyl-(C₁-C₄)alkyl, aryl(C₁-C₄)alkyl;
R⁴ is hydrogen or a (C₁-C₇)carbon-containing radical such as (C₁-C₄)alkyl, (C₂-C₄)alkenyl, (C₂-C₄)alkynyl, (C₁-C₄)haloalkyl, phenyl, benzyl;
and
Z is the radical (Z2), 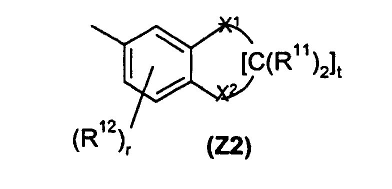 where the symbols and indices have the following meanings:
R¹¹ is identical or different hydrogen, (C₁-C₄)alkyl, halogen;
R¹² is identical or different (C₁-C₄)alkyl, (C₂-C₄)alkenyl, (C₂-C₄)alkynyl, halogen, (C₁-C₄)haloalkyl, (C₂-C₄)haloalkenyl, (C₂-C₄)haloalkynyl, (C₁-C₄)haloalkoxy, (C₁-C₄)haloalkylthio, (C₁-C₄)alkoxycarbonyl, (C₁-C₄)alkylsulfonyl, (C₁-C₄)haloalkylsulfonyl, (C₁-C₄)alkylsulfinyl, (C₁-C₄)haloalkylsulfinyl, (C₁-C₄)alkylthio, (C₁-C₄)alkoxy, (C₁-C₄)alkylcarbonyl, (C₁-C₄)alkylaminosulfonyl, (C₁-C₄)dialkylaminosulfonyl, (C₁-C₄)alkylcarbamoyl, (C₁-C₄)dialkylcarbamoyl, (C₁-C₄)alkoxyalkyl, phenoxy, nitro, cyano, aryl, di-(C₁-C₄)allcylphosphono-(C₁-C₄)alkyl;
r is 0, 1, 2 or 3;
t is 1 or 2;
X¹ is O, CR¹⁴R¹⁵, CHOH, C=O, C=NO(C₁-C₄)alkyl;
X² is O, S, SO, SO₂, CH₂, NH, N(C₁-C₄)alkyl, NSO₂(C₁-C₄)alkyl;
R¹⁴, R¹⁵ is identical or different hydrogen, (C₁-C₄)alkyl, (C₁-C₄)alkoxy, (C₁-C₄)haloalkoxy, (C₁-C₄)alkylthio, (C₁-C₄)haloalkylthio or R¹⁴ and R¹⁵ together form one of the groups -O-(CH₂)₂-O-, -O-(CH₂)₃-O-, S-(CH₂)₂-S-, -S-(CH₂)₃-S-, -(CH₂)₄-, -(CH₂)₅-;
and
B. an antidote-effective amount of one or more compounds selected from the group a):
a) compounds of the formulae (II) to (IV), 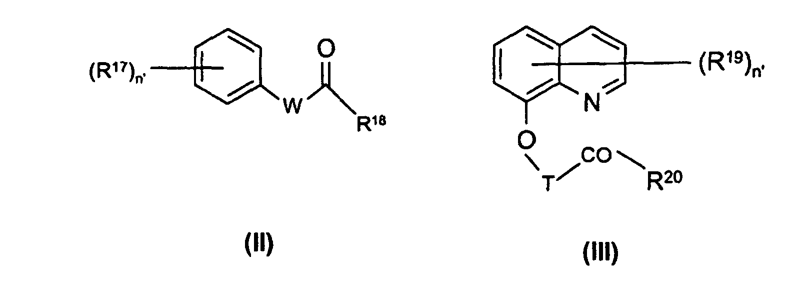 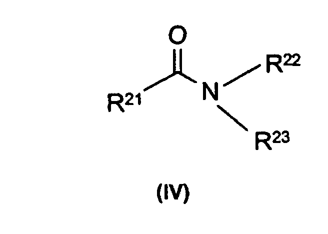 where the symbols and indices have the following meanings:
n' is a natural number from 1 to 5, preferably 1 to 3
T is a (C₁ or C₂)-alkanediyl chain which is unsubstituted or substituted by one or two (C₁-C₄)alkyl radicals or by [(C₁-C₃)-alkoxy]carbonyl,
W is an unsubstituted or substituted divalent heterocyclic radical selected from the group consisting of the partially unsaturated or aromatic five-ringed heterocycles having 1 to 3 hetero ring atoms of the type N or O, the ring containing at least one nitrogen atom and not more than one oxygen atom;
m' is 0 or 1;
R¹⁷, R¹⁹ are identical or different hydrogen, halogen, (C₁-C₄)alkyl, (C₁-C₄)alkoxy, nitro or (C₁-C₄)haloalkyl;
R¹⁸, R²⁰ are identical or different OR²⁴, SR²⁴ or NR²⁴R²⁵ or a saturated or unsaturated 3- to 7-membered heterocycle having at least one nitrogen atom and up to 3 hetero atoms which is linked to the carbonyl group in (II) or (III) via the nitrogen atom and which is unsubstituted or substituted by radicals from the group consisting of (C₁-C₄)alkyl, (C₁-C₄)alkoxy or optionally substituted phenyl;
R²⁴ is hydrogen or an unsubstituted or substituted aliphatic hydrocarbon radical;
R²⁵ is hydrogen, (C₁-C₆)alkyl, (C₁-C₆)alkoxy or substituted or unsubstituted phenyl;
R²⁶ is hydrogen, (C₁-C₈)alkyl, (C₁-C₈)haloalkyl, (C₁-C₄)alkoxy(C₁-C₄)alkyl, (C₁-C₆)hydroxyalkyl, (C₃-C₁₂)cycloalkyl or tri(C₁-C₄)-alkylsilyl;
R²⁷, R²⁸, R²⁹ are identical or different hydrogen, (C₁-C₈)alkyl, (C₁-C₈)haloalkyl, (C₃-C₁₂)cycloalkyl or substituted or unsubstituted phenyl;
R²¹ is (C₁-C₄)alkyl, (C₁-C₄)haloalkyl, (C₂-C₄)alkenyl, (C₂-C₄)haloalkenyl, (C₃-C₇)cycloalkyl;
R²², R²³ is identical or different hydrogen, (C₁-C₄)alkyl, (C₂-C₄)alkenyl, (C₂-C₄)alkynyl, (C₁-C₄)haloalkyl, (C₂-C₄)haloalkenyl, (C₁-C₄)alkylcarbamoyl-(C₁-C₄)alkyl, (C₂-C₄)alkenylcarbamoyl-(C₁-C₄)alkyl, (C₁-C₄)alkoxy-(C₁-C₄)alkyl, dioxolanyl-(C₁-C₄)alkyl, thiazolyl, furyl, furylalkyl, thienyl, piperidyl, substituted or unsubstituted phenyl, or R²² and R²³ together form a substituted or unsubstituted heterocyclic ring;
inclusive of the stereoisomers and of the salts conventionally used in agriculture.

2. A herbicidal composition as claimed in claim 1, which comprises a compound of the formula (I) where the symbols and indices have the following meanings:
R² is hydrogen;
R³ is hydrogen, (C₁-C₄)alkyl, arylsulfonyl, benzyl;
R⁴ is (C₁-C₄)alkyl;
R¹¹ is (C₁-C₄)alkyl;
R¹² is (C₁-C₄)alkyl, halogen, (C₁-C₄)haloalkyl, (C₁-C₄)alkylsulfonyl, (C₁-C₄)alkoxycarbonyl;
r is 0, 1, 2 or 3;
t is 1 or 2;
X¹ is O, CR¹⁴R¹⁵, CHOH, C=O, C=NO(C₁-C₄)alkyl;
X² is SO₂;
R¹⁴, R¹⁵ is identical or different hydrogen, (C₁-C₄)alkyl, (C₁-C₄)alkoxy, (C₁-C₄)haloalkoxy, (C₁-C₄)alkylthio, (C₁-C₄)haloalkylthio or R¹⁴ and R¹⁵ together form one of the groups -O-(CH₂)₂-O-, -O-(CH₂)₃-O- , S-(CH₂)₂-S-, -S-(CH₂)₃-S- , -(CH₂)₄-, -(CH₂)₅-;
R²³ is (C₁-C₂)alkyl.

3. A herbicidal composition as claimed in claim 1 or 2, wherein W in the formula (II) is a radical selected from the group consisting of (W1) to (W4), 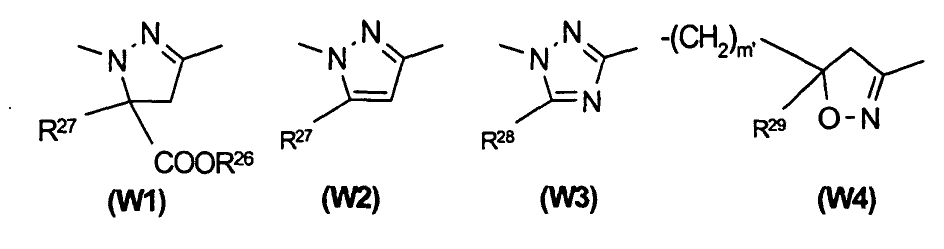 where the symbols and indices have the following meanings:
m' is 0 or 1;
_{R}²⁶ is hydrogen, (C₁-C₈)alkyl, (C₁-C₈)haloalkyl, (C₁-C₄)alkoxy(C₁-C₄)alkyl, (C₁-C₆)hydroxyalkyl, (C₃-C₁₂)cycloalkyl or tri(C₁-C₄)alkylsilyl;
R²⁷, R²⁸, R²⁹ are identical or different hydrogen, (C₁-C₈)alkyl, (C₁-C₈)haloalkyl, (C₃-C₁₂)cycloalkyl or substituted or unsubstituted phenyl.

4. A herbicidal composition as claimed in one or more of claims 1 to 3 comprising safeners of the formula (II) and/or (III) in which the symbols and indices have the following meanings:
R¹⁸, R²⁰ is -O-R²⁴;
R²⁴ is hydrogen, (C₁-C₁₈)alkyl, (C₃-C₁₂)cycloalkyl, (C₂-C₈)alkenyl and (C₂-C₁₈)alkynyl, it being possible for the carbon-containing groups to be substituted by one or more radicals R⁵⁰;
R⁵⁰ is identical or different halogen, hydroxyl, (C₁-C₈)alkoxy, (C₁-C₈)alkylthio, (C₂-C₈)alkenylthio, (C₂-C₈)alkynylthio, (C₂-C₈)alkenyloxy, (C₂-C₈)alkynyloxy, (C₃-C₇)cycloalkyl, (C₃-C₇)cycloalkoxy, cyano, mono- and di(C₁-C₄)alkylamino, carboxyl, (C₁-C₈)alkoxycarbonyl, (C₂-C₈)alkenyloxycarbonyl, (C₁-C₈)alkylthiocarbonyl, (C₂-C₈)alkynyloxycarbonyl, (C₁-C₈)alkylcarbonyl, (C₂-C₈)alkenylcarbonyl, (C₂-C₈)alkynylcarbonyl, 1-(hydroxyimino)(C₁-C₆)alkyl, 1-[(C₁-C₄)alkylimino](C₁-C₄)alkyl, 1-[(C₁-C₄)alkoxyimino](C₁-C₆)alkyl, (C₁-C₈)alkylcarbonylamino, (C₂-C₈)alkenylcarbonylamino, (C₂-C₈)alkynylcarbonylamino, aminocarbonyl, (C₁-C₈)allcylaminocarbonyl, di(C₁-C₆)alkylaminocarbonyl, (C₂-C₆)alkenylaminocarbonyl, (C₂-C₆)alkynylaminocarbonyl, (C₁-C₈)alkoxycarbonylamino, (C₁-C₈)alkylaminocarbonylamino, (C₁-C₆)alkylcarbonyloxy, which is unsubstituted or substituted by R⁵¹, (C₂-C₆)alkenylcarbonyloxy, (C₂-C₆)alkynylcarbonyloxy, (C₁-C₈)alkylsulfonyl, phenyl, phenyl(C₁-C₆)alkoxy, phenyl(C₁-C₆)allcoxycarbonyl, phenoxy, phenoxy(C₁-C₆)alkoxy, phenoxy(C₁-C₆)alkoxycarbonyl, phenylcarbonyloxy, phenylcarbonylamino, phenyl(C₁-C₆)-alkylcarbonylamino, it being possible for the last-mentioned 9 radicals to be unsubstituted or mono- or polysubstituted in the phenyl ring, by radicals R⁵²; SiR'₃, -O-SiR'₃, R'₃Si-(C₁-C₈)-alkoxy, -CO-O-NR'₂, -O-N=CR'₂, -N=CR'₂, -O-NR'₂, -NR'₂, CH(OR')₂, -O-(CH₂)ₘ-CH(OR')₂, -CR'''(OR')₂, -O-(CH₂)ₘCR'''(OR")₂ or by R''O-CHR'''CHCOR''-(C₁-C₆)-alkoxy,
R⁵¹ is identical or different halogen, nitro, (C₁-C₄)alkoxy and phenyl which is unsubstituted or substituted by one or more radicals R⁵²;
R⁵² is identical or different halogen, (C₁-C₄)alkyl, (C₁-C₄)alkoxy, (C₁-C₄)haloallkyl, (C₁-C₄)haloalkoxy or nitro;
R' is identical or different hydrogen, (C₁-C₄)alkyl, phenyl which is unsubstituted or substituted by one or more radicals R⁵², or two radicals R' together form a (C₂-C₆)alkanediyl chain;
R" is identical or different (C₁-C₄)alkyl or two radicals R" together form a (C₂-C₆)alkanediyl chain;
R''' is hydrogen or (C₁-C₄)alkyl;
m is 0, 1, 2, 3,4, 5 or 6.

5. A herbicidal composition as claimed in one or more of claims 1 to 4 comprising safeners of the formula (II) and/or (III) in which the symbols and indices have the following meanings:
R²⁴ is hydrogen, (C₁-C₈)alkyl or (C₃-C₇)cycloalkyl, the abovementioned carbon-containing radicals being unsubstituted or mono- or polysubstituted by halogen or mono- or disubstituted by radicals R⁵⁰,
R⁵⁰ is identical or different hydroxyl, (C₁-C₄)alkoxy, carboxyl, (C₁-C₄)alkoxycarbonyl, (C₂-C₆)alkenyloxycarbonyl, (C₂-C₆)alkynyloxycarbonyl, 1-(hydroxyimino)(C₁-C₄)alkyl, 1-[(C₁-C₄)alkylimino](C₁-C₄)alkyl and 1-[(C₁-C₄)alkoxyimino](C₁-C₄)alkyl; -SiR'₃, -O-N=CR'₂, -N=CR'₂, -NR'₂ and -O-NR'₂, in which R' is identical or different hydrogen, (C₁-C₄)alkyl or, as a pair, a (C₄-C₅)alkanediyl chain,
R²⁷, R²⁸, ^{R29} are identical or different hydrogen, (C₁-C₈)alkyl, (C₁-C₆)haloalkyl, (C₃-C₇)cycloalkyl or phenyl which is unsubstituted or substituted by one or more radicals selected from the group consisting of halogen, cyano, nitro, amino, mono- and di[(C₁-C₄)alkyl]amino, (C₁-C₄)alkyl, (C₁-C₄)haloalkyl, (C₁-C₄)alkoxy, (C₁-C₄)haloalkoxy, (C₁-C₄)alkylthio and (C₁-C₄)alkylsulfonyl;
R²⁶ is hydrogen, (C₁-C₈)alkyl, (C₁-C₈)haloalkyl, (C₁-C₄)allcoxy-(C₁-C₄)alkyl, (C₁-C₆)hydroxyalkyl, (C₃-C₇)cycloalkyl or tri(C₁-C₄)alkylsilyl,
R¹⁷, R¹⁹ are identical or different hydrogen, halogen, methyl, ethyl, methoxy, ethoxy, (C₁ or C₂)haloalkyl.

6. A herbicidal composition as claimed in one or more of claims 1 to 5 comprising a safener of the formula (II) where the symbols and indices have the following meanings:
R¹⁷ is hydrogen, halogen, nitro or (C₁-C₄)haloalkyl;
n is 1, 2 or 3;
R¹⁸ is a radical of the formula OR²⁴,
R²⁴ is hydrogen, (C₁-C₈)alkyl or (C₃-C₇)cycloalkyl, the abovementioned carbon-containing radicals being unsubstituted or mono- or polysubstituted by identical or different halogen radicals or up to disubstituted by identical or different radicals selected from the group consisting of hydroxyl, (C₁-C₄)alkoxy, (C₁-C₄)alkoxycarbonyl, (C₂-C₆)alkenyloxycarbonyl, (C₂-C₆)alkynyloxycarbonyl, 1-(hydroxyimino)(C₁-C₄)alkyl, 1-[(C₁-C₄)alkylimino](C₁-C₄)alkyl, 1-[(C₁-C₄)alkoxyimino](C₁-C₄)alkyl and radicals of the formulae -SiR'₃, -O-N=R'₂, -N=CR'₂, -NR'₂ and -O-NR'₂, the radicals R' in the abovementioned formulae being identical or different hydrogen, (C₁-C₄)alkyl or, in pairs, (C₄ or C₅)alkanediyl;
R²⁷, R²⁸, R²⁹ are identical or different hydrogen, (C₁-C₈)alkyl, (C₁-C₆)haloalkyl, (C₃-C₇)cycloalkyl or phenyl which is unsubstituted or substituted by one or more radicals selected from the group consisting of halogen, (C₁-C₄)alkyl, (C₁-C₄)alkoxy, nitro, (C₁-C₄)haloalkyl and (C₁-C₄)haloalkoxy, and
R²⁶ is hydrogen, (C₁-C₈)alkyl, (C₁-C₈)haloalkyl, (C₁-C₄)allcoxy-(C₁-C₄)allcyl, (C₁-C₆)hydroxyalkyl, (C₃-C₇)cycloalkyl or tri(C₁-C₄)alkylsilyl.

7. A herbicidal composition as claimed in one or more of claims 1 to 6, wherein the weight ratio herbicide:safener is 1:100 to 100:1.

8. A herbicidal composition as claimed in one or more of claims 1 to 7, which comprises a further herbicide.

9. A herbicidal composition as claimed in claim 8, wherein the further herbicide is a sulfonylurea.

10. A method of controlling harmful plants in crops, which comprises applying a herbicidally effective amount of a herbicide/safener combination as claimed in one or more of claims 1 to 9 to the harmful plants, the plants, the seeds of the plants or the area on which the plants grow.

11. The method as claimed in claim 10, wherein the plants originate from the group consisting of maize, wheat, rye, barley, oats, rice, sorghum, cotton and soya.

12. A method as claimed in claim 10 or 11, wherein the plants are genetically modified.

## Revendications

1. Agent herbicide efficace contenant un mélange de
(A) une quantité herbicide efficace d'un ou plusieurs composés de formule (I) 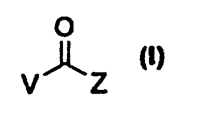 dans laquelle
V représente le reste (V2), 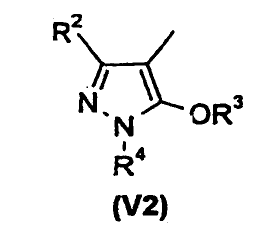 où les symboles et indices ont les significations suivantes :
R² représente un atome d'hydrogène, un groupe alkyle en C₁-C₄, alkoxy en C₁-C₄, halogénoalkyle en C₁-C₄, un atome d'halogène, halogénoalkoxy en C₁-C₄, cyano, nitro;
R³ représente un atome d'hydrogène ou un reste carboné en C₁-C₄ comme alkyle en C₁-C₄, alcényle en C₂-C₄, alcinyle en C₂-C₄, halogénoalkyle en C₁-C₄, alkoxy en C₁-C₄-alkyle en C₁-C₄, (alkyl en C₁-C₄)-carbonyle, (alkyl en C₁-C₄)sulfonyle, halogéno(alkyl en C₁-C₄)sulfonyle, arylsulfonyle, arylcarbonyl-alkyle en C₁-C₄, aryl-alkyle en C₁-C₄;
R⁴ représente un atome d'hydrogène ou un reste carboné en C₁-C₇ comme alkyle en C₁-C₄, alcényle en C₂-C₄, alcinyle en C₂-C₄, halogénoalkyle en C₁-C₄, phényle, benzyle ;
et
Z représente le reste (Z2), 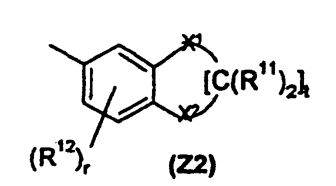
où les symboles et indices ont les significations suivantes :
R¹¹ représente identique ou différent un atome d'hydrogène, un groupe alkyle en C₁-C₄, un atome d'halogène,
R¹² représente identique ou différent un groupe alkyle en C₁-C₄, alcényle en C₂-C₄, alcinyle en C₂-C₄, un atome d'halogène, un groupe halogénoalkyle en C₁-C₄, halogénoalcényle en C₂-C₄, halogénoalcinyle en C₂-C₄, halogénoalkoxy en C₁-C₄, halogéno(alkyl en C₁-C₄)thio, alkoxy en C₁-C₄-carbonyle, (alkyl en C₁-C₄)sulfonyle, halogéno(alkyl en C₁-C₄)sulfonyle, (alkyl en C₁-C₄)sulfinyle, halogéno(alkyl en C₁-C₄)sulfinyle, (alkyl en C₁-C₄)thio, alkoxy en C₁-C₄, (alkyl en C₁-C₄)carbonyle, (alkyl en C₁-C₄)aminosulfonyle, di (alkyl en C₁-C₄)aminosulfonyle, (alkyl en C₁-C₄)carbamoyle, di (alkyl en C₁-C₄)carbamoyle, alkoxyalkyle en C₁-C₄, phénoxy, nitro, cyano, aryle, di-(alkyl en C₁-C₄)phosphono-alkyle en C₁-C₄ ;
r vaut 0, 1, 2 ou 3 ;
t vaut 1 ou 2 ;
X¹ représente O, CR¹⁴R¹⁵, CHOH, C=O, C=NO(alkyle en C₁-C₄) ;
X² représente O, S, SO, SO₂, CH₂, NH, N(alkyle en C₁-C₄), NSO₂(alkyle en C₁-C₄) ;
R¹⁴, R¹⁵ représentent identiques ou différents un atome d'hydrogène, un groupe alkyle en C₁-C₄, alkoxy en C₁-C₄, halogénoalkoxy en C₁-C₄, (alkyl en C₁-C₄)thio, halogéno(alkyl en C₁-C₄)thio, ou R¹⁴ et R¹⁵ forment ensemble un des groupes -O-(CH₂)₂-O-, -O-(CH₂)₃-O- , S-(CH₂)₂-S-, -S-(CH₂)₃-S- , -(CH₂)₄-, -(CH₂)₅- ;
et
B. une quantité antidote efficace d'un ou plusieurs composés pris dans le groupe a)
a) Composés de formule (II) à (IV), 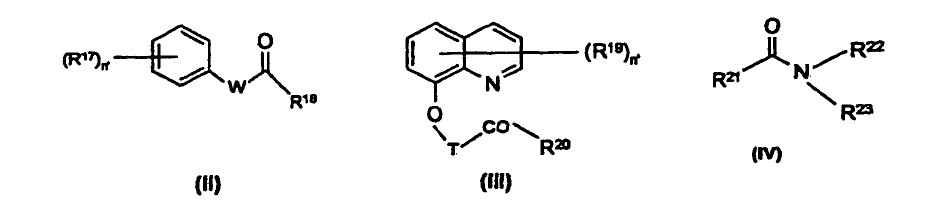 dans lesquelles les symboles et indices ont les significations suivantes :
n' vaut un nombre naturel de 1 à 5, de préférence de 1 à 3;
T est une chaîne (alcane en C₁ ou C₂)diylique qui est non substituée ou substituée par un ou deux restes alkyles en C₁-C₄ ou par un reste (alkoxy en C₁-C₃)carbonyle;
W représente un reste hétérocyclique divalent non substitué ou substitué du groupe des hétérocycles à cinq chaînons en partie insaturés ou aromatiques avec 1 à 3 hétéroatomes dans le cycle du type N ou O, au moins un atome d'azote et au plus un atome d'oxygène étant contenu dans le cycle,
m' vaut 0 ou 1;
R¹⁷, R¹⁹ représentent, identiques ou différents, un atome d'hydrogène, d'halogène, un groupe alkyle en C₁-C₄, alkoxy en C₁-C₄, nitro ou halogénoalkyle en C₁-C₄,
R¹⁸, R²⁰ représentent, identiques ou différents, un groupe OR²⁴, SR²⁴ ou NR²⁴R²⁵ ou un hétérocycle de 3 à 7 chaînons saturé ou insaturé avec au moins un atome d'azote et jusqu'à 3 hétéroatomes, qui est relié sur l'atome d'azote avec le groupe carbonyle dans (II) respectivement (III) et qui est non substitué ou substitué par des restes du groupe composé de alkyle en C₁-C₄, alkoxy en C₁-C₄, ou par éventuellement un groupe phényle substitué ;
R²⁴ représente un atome d'hydrogène ou un reste hydrocarbure aliphatique non substitué ou substitué ;
R²⁵ représente un atome d'hydrogène, un groupe alkyle en C₁-C₆, alkoxy en C₁-C₆ ou un groupe phényle substitué ou non substitué;
R²⁶ représente un atome d'hydrogène, un groupe alkyle en C₁-C₈, halogénoalkyle en C₁-C₈, alkoxy en C₁-C₄-alkyle en C₁-C₄, hydroxyalkyle en C₁-C₆, cycloalkyle en C₃-C₁₂ ou tri-(alkyl en C₁-C₄)-silyle;
R²⁷, R²⁸, R²⁹ représentent, identiques ou différents, un atome d' hydrogène un groupe alkyle en C₁-C₈, halogénoalkyle en C₁-C₈, cycloalkyle en C₃-C₁₂ ou un groupe phényle substitué ou non substitué ;
R²¹ représente un groupe alkyle en C₁-C₄, halogénoalkyle en C₁-C₄, alcényle en C₂-C₄, halogénoalcényle en C₂-C₄, cycloalkyle en C₃-C₇ ;
R²², R²³ représentent, identiques ou différents, un atome d'hydrogène, un groupe alkyle en C₁-C₄, alcényle en C₂-C₄, alcinyle en C₂-C₄, halogénoalkyle en C₁-C₄, halogénoalcényle en C₂-C₄, (alkyl en C₁-C₄)carbamoyle-alkyle en C₁-C₄, (alcényle en C₂-C₄)carbamoyle-alkyle en C₁-C₄, alkoxy en C₁-C₄-alkyle en C₁-C₄, dioxolanyl-alkyle en C₁-C₄, phényle non substitué, ou R²² et R²³ forment ensemble un cycle hétérocyclique substitué ou non substitué ;
y compris les stéréoisomères et les sels employés dans l'agriculture.

2. Agent herbicide selon la revendication 1, **caractérisé par** un composé de formule (I) dans laquelle les symboles et indices ont les significations suivantes :
R² représente un atome d'hydrogène;
R³ représente un atome d'hydrogène, un groupe alkyle en C₁-C₄, arylsulfonyle, benzyle;
R⁴ représente un groupe alkyle en C₁-C₄;
R¹¹ représente un groupe alkyle en C₁-C₄;
R¹² représente un groupe alkyle en C₁-C₄, un atome d'halogène, un groupe halogénoalkyle en C₁-C₄, (alkyl en C₁-C₄)sulfonyle, alkoxy en C₁-C₄-carbonyle ;
r vaut 0, 1, 2 ou 3 ;
t vaut 1 ou 2 ;
X¹ représente O, CR¹⁴R¹⁵, CHOH, C=O, C=NO(alkyle en C₁-C₄) ;
X² représente SO₂ ;
R¹⁴, R¹⁵ représentent identiques ou différents un atome d'hydrogène, un groupe alkyle en C₁-C₄, alkoxy en C₁-C₄, halogénoalkoxy en C₁-C₄, (alkyl en C₁-C₄)thio, halogéno(alkyl en C₁-C₄)thio, ou R¹⁴ et R¹⁵ forment ensemble un des groupes -O-(CH₂)₂-O-, -O-(CH₂)₃-O- , S-(CH₂)₂-S-, -S-(CH₂)₃-S- , -(CH₂)₄-, -(CH₂)₅- ;
R²³ représente un groupe alkyle en C₁-C₂ ;

3. Agent herbicide selon la revendication 1 ou 2, **caractérisé en ce que** W représente dans la formule (II) un reste pris dans le groupe (W1) à (W4), 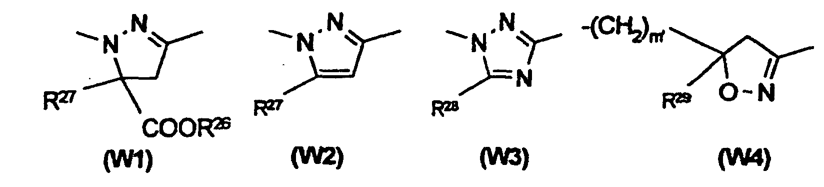 où les symboles et indices ont les significations suivantes :
m' vaut 0 ou 1;
R²⁶ représente un atome d'hydrogène, un groupe alkyle en C₁-C₈, halogénoalkyle en C₁-C₈, alkoxy en C₁-C₄-alkyle en C₁-C₄, hydroxyalkyle en C₁-C₆, cycloalkyle en C₃-C₁₂ ou tri-(alkyle en C₁-C₄)-silyle;
R²⁷, R²⁸, R²⁹ représentent, identiques ou différents, un atome d'hydrogène, un groupe alkyle en C₁-C₈, halogénoalkyle en C₁-C₈, cycloalkyle en C₃-C₁₂ ou un groupe phényle substitué ou non substitué;

4. Agent herbicide selon une ou plusieurs des revendications 1 à 3, contenant des antidotes de formule (II) et/ou (III) pour lesquels les symboles et indices ont les significations suivantes:
R¹⁸, R²⁰ représente -O-R²⁴;
R²⁴ représente un atome d'hydrogène, un groupe alkyle en C₁-C₁₈, cycloalkyle en C₃-C₁₂, alcényle en C₂-C₈ et alcynyle en C₂-C₁₈, où les groupes contenant des C peuvent être substitués par un ou plusieurs restes R⁵⁰ ;
R⁵⁰ représente identique ou différent un atome d'halogène, un groupe hydroxy, alkoxy en C₁-C₈, alkylthio en C₁-C₈, alcénylthio en C₂-C₈, alcynylthio en C₂-C₈, alcényloxy en C₂-C₈, alcynyloxy en C₂-C₈, cycloalkyle en C₃-C₇, cycloalkoxy en C₃-C₇, cyano, mono- et dialkyle en C₁-C₄-amino, carboxy, alkoxycarbonyl en C₁-C₈, alcényloxycarbonyl en C₂-C₈, (alkyle en C₁-C₈)thiocarbonyle, alcynyloxycarbonyle en C₂-C₈, alkylcarbonyle en C₁-C₈, alcénylcarbonyle en C₂-C₈, alcynylcarbonyle en C₂-C₈, 1-(hydroxyimino)alkyle en C₁-C₆, 1-[alkylimino en C₁-C₄]-alkyle en C₁-C₄, 1-[alkoxyimino en C₁-C₄]-alkyle en C₁-C₆, alkylcarbonylamino en C₁-C₈, alcénylcarbonylamino en C₂-C₈, alcynylcarbonylamino en C₂-C₈, aminocarbonyle, alkylaminocarbonyle en C₁-C₈, di-(alkyle en C₁-C₆)-aminocarbonyle, (alcényle en C₂-C₆)-aminocarbonyl, (alcynyle en C₂-C₆)-aminocarbonyle, (alkoxy en C₁-C₈)-carbonylamino, (alkyle en C₁-C₈)-aminocarbonylamino, (alkyle en C₁-C₆)-carbonyloxy, qui est non substitué ou substitué par R⁵¹, (alcényle en C₂-C₆)carbonyloxy, (alcynyle en C₂-C₆)-carbonyloxy, (alkyle en C₁-C₈)sulfonyle, phényle, phényle-alkoxy en C₁-C₆, phényle-alkoxy en C₁-C₆-carbonyle, phénoxy, phénoxy-alkoxy en C₁-C₆, phénoxy-alkoxy en C₁-C₆-carbonyle, phénylcarbonyloxy, phénylcarbonylamino, phényle-alkyl en C₁-C₆-carbonylamino, où les 9 derniers restes dans le cycle phényle sont non substitués ou substitués une ou plusieurs fois par des restes R⁵² ; SiR'₃, -O-SiR'₃, R'₃Si-alkoxy en C₁-C₈, -CO-O-NR'₂, -O-N=CR'₂, -N=CR'₂, -O-NR'₂, -NR'₂, CH(OR')₂, -O-(CH₂)m-CH(OR')₂, - CR"'(OR')₂, -O-(CH₂)mCR"'(OR")₂ ou par R"O-CHR"'CHCOR"-alkoxy en C₁-C₆,
R⁵¹ représente, identique ou différent, un atome d'halogène, un groupe nitro, alkoxy en C₁-C₄ et phényle non substitué ou substitué avec un ou plusieurs restes R⁵²;
R⁵² représente, identique ou différent, un atome d'halogène, un groupe alkyle en C₁-C₄, alkoxy en C₁-C₄, halogénoalkyle en C₁-C₄, halogénoalkoxy en C₁-C₄ ou nitro ;
R' représente, identique ou différent, un atome d'hydrogène, un groupe alkyle en C₁-C₄, un groupe phényle non substitué ou substitué par un ou plusieurs restes R⁵² substitués ou deux restes R' représentent ensemble une chaîne alcanodiylique en C₂-C₆;
R" représente, identique ou différent, un groupe alkyle en C₁-C₄ ou deux restes R" représentent ensemble une chaîne alcanodiylique en C₂-C₆;
R'" représente un atome d'hydrogène ou un groupe alkyle en C₁-C₄;
m vaut 0, 1, 2, 3, 4, 5 ou 6.

5. Agent herbicide selon une ou plusieurs des revendications 1 à 4, contenant des antidotes de formule (II) et/ou (III) pour lesquels les symboles et indices ont les significations suivantes:
R²⁴ représente un atome d'hydrogène, un groupe alkyle en C₁-C₈ ou cycloalkyle en C₃-C₇, où les restes précédents contenant des C sont non substitués ou substitués une ou plusieurs fois par un atome d'halogène ou une ou deux fois par des restes R⁵⁰,
R⁵⁰ représente, identique ou différent, un groupe hydroxy, alkoxy en C₁-C₄, carboxy, alkoxycarbonyle en C₁-C₄, alcényloxycarbonyle en C₂-C₆, alcynyloxycarbonyle en C₂-C₆, 1-(hydroxyimino)-alkyle en C₁-C₄, 1-(alkylimino en C₁-C₄)-alkyle en C₁-C₄ et 1-(alkoxyimino en C₁-C₄)-alkyle en C₁-C₄ ; -SiR'₃, -O-N=CR'₂, - N=CR'₂, -NR'₂ et -O-NR'₂ où R', identique ou différent, signifie un atome d'hydrogène, un groupe alkyle en C₁-C₄ ou en partie une chaîne alcanodiylique en C₄-C₅,
R²⁷, R²⁸, R²⁹ représentent, identiques ou différents, un atome d'hydrogène, un groupe alkyle en C₁-C₈, halogénoalkyle en C₁-C₆, cycloalkyle en C₃-C₇ ou phényle, qui est non substitué ou substitué par un ou plusieurs des restes du groupe halogène, cyano, nitro, amino, mono- et di-(alkyle en C₁-C₄)-amino, alkyle en C₁-C₄, halogénoalkyle en C₁-C₄, alkoxy en C₁-C₄, halogénoalkoxy en C₁-C₄, (alkyl en C₁-C₄)thio et (alkyl en C₁-C₄)sulfonyle;
R²⁶ représente un atome d'hydrogène, un groupe alkyle en C₁-C₈, halogénoalkyle en C₁-C₈, (alkoxy en C₁-C₄) -alkyle en C₁-C₄, hydroxyalkyle en C₁-C₆, cycloalkyle en C₃-C₇ ou tri-(alkyl en C₁-C₄)-silyle,
R¹⁷, R¹⁹ représentent, identiques ou différents, un atome d'hydrogène, d'halogène, un groupe méthyle, éthyle, méthoxy, éthoxy, halogénoalkyle en C₁ ou C₂.

6. Agent herbicide selon une ou plusieurs des revendications 1 à 5, contenant un antidote de formule (II) dans laquelle les symboles et indices ont les significations suivantes:
R¹⁷ représente un atome d'hydrogène, d'halogène, un groupe nitro ou halogénoalkyle en C₁-C₄ ;
n' vaut 0, 1, 2 ou 3;
R¹⁸ représente un reste de formule OR²⁴,
R²⁴ représente un atome d'hydrogène, un groupe alkyle en C₁-C₈ ou cycloalkyle en C₃-C₇, où les restes carbonés précédents sont non substitués ou substitués une ou plusieurs fois par des restes halogène, identiques ou différents ou jusqu'à deux fois par des restes identiques ou différents du groupe hydroxy, alkoxy en C₁-C₄, alkoxycarbonyle en C₁-C₄, alcényloxycarbonyle en C₂-C₆, alcynyloxycarbonyle en C₂-C₆, 1-(hydroxyimino)-alkyle en C₁-C₄, 1-(alkylimino en C₁-C₄)-alkyle en C₁-C₄, 1-(alkoxyimino en C₁-C₄)-alkyle en C₁-C₄ et des restes de formule -SiR'₃, -O-N=CR'₂, -N=CR'₂, -NR'₂ et -O-NR'₂ où les restes R' dans les formules citées, identiques ou différents, signifient un atome d'hydrogène, un groupe alkyle en C₁-C₄ ou en partie une chaîne alcanodiylique en C₄ ou C₅ ;
R²⁷, R²⁸, R²⁹ représentent, identiques ou différents, un atome d'hydrogène, un groupe alkyle en C₁-C₈, halogénoalkyle en C₁-C₆, cycloalkyle en C₃-C₇ ou phényle, qui est non substitué ou substitué par un ou plusieurs des restes du groupe halogène, alkyle en C₁-C₄, alkoxy en C₁-C₄, nitro, halogénoalkyle en C₁-C₄ et halogénoalkoxy en C₁-C₄, et
R²⁶ représente un atome d'hydrogène, un groupe alkyle en C₁-C₈, halogénoalkyle en C₁-C₈, (alkoxy en C₁-C₄)-alkyle en C₁-C₄, hydroxyalkyle en C₁-C₆, cycloalkyle en C₃-C₇ ou tri-(alkyl en C₁-C₄)-silyle.

7. Agent herbicide selon une ou plusieurs des revendications 1 à 6, **caractérisé en ce que** le rapport en poids herbicide:antidote s'élève de 1:100 à 100:1.

8. Agent herbicide selon une ou plusieurs des revendications 1 à 7, **caractérisé en ce qu'**il contient un autre herbicide.

9. Agent herbicide selon la revendication 8, **caractérisé en ce que** l'autre herbicide est une sulfonylurée.

10. Procédé pour la lutte contre des plantes nuisibles dans des cultures, **caractérisé en ce que** l'on apporte une quantité herbicide efficace d'une combinaison herbicide-antidote selon une ou plusieurs des revendications 1 à 9, sur les plantes nuisibles, plantes, semences de plantes ou sur la surface sur laquelle les plantes poussent.

11. Procédé selon la revendication 10, **caractérisé en ce que** les plantes proviennent du groupe maïs, blé, seigle, orge, avoine, riz, sorgho, coton et soja.

12. Procédé selon la revendication 10 ou 11, **caractérisé en ce que** les plantes sont modifiées par génie génétique.
